# EUROPEAN PATENT SPECIFICATION

(11) **EP 0 409 614 B1**
(45) Date of publication and mention of the grant of the patent: **03.04.1996**
(21) Application number: 90307897.0
(22) Date of filing: 19.07.1990
(51) Int. Cl.: F41G 7/32, F41G 7/30

(54) **A digital electronics assembly for a tube-launched missile**
Digitales elektronisches Bauelement für einen Flugkörper, der aus einem Rohr abgefeuert wird
Ensemble électronique numérique pour missile lancé par tube

(30) Priority: 21.07.1989 US 384229
(43) Date of publication of application: 23.01.1991
(73) Proprietor: Hughes Aircraft Company, Los Angeles, California 90045-0066 (US)
(72) Inventor: Oaks, Richard W., Tucson, Arizona 85716 (US)
(74) Representative: Colgan, Stephen James

(56) References cited:
- EP-A- 0 412 654
- US-A- 3 008 668
- US-A- 3 808 542
- US-A- 3 900 843
- US-A- 4 611 771
- US-A- 4 705 237
- US-A- 4 770 370

## Description

### BACKGROUND OF THE INVENTION

### Field of the Invention:

This invention relates generally to missiles and more particularly to tube-launched operator-guided missiles

### Description of Related Art:

Tube-launched operator-guided missiles were first developed over a decade ago and have proven very effective against such targets as tanks, personnel carriers, bunkers, and the like.

A large part of these missiles effectiveness and appeal is their simple operational concept. The operator of the "guides" the missile to the target. Communication with the missile is through a wire or fiber optic link. Using a telescope pointing mechanism, the operator controls the missile to avoid field obstructions such as trees or hills. Since the operator controls the line of flight, a great operational burden is removed from the missile itself, and, the brains or complexity, required in other types of missiles, is reduced. This significantly reduces the cost of the missile.

As far as applicant is aware, these missiles currently receive the operator generated signals in analog form. The analog form is adequate for the communication of signals since the missile's electronic control unit utilizes changes in voltage in the communication link (a pair of thin steel lines) for providing the desired flight control.

Several problems attend the use of analog circuits. Where the incoming signal is analog, the electronics unit is also analog. However, being analog in nature, the electronics unit has been relative bulky and complex.

Another major difficulty with analog circuits, is that modification of the circuit's objective or operation is very difficult, requiring almost a total re-engineering of the circuit. Once a missile has been tested, even a slight control function change disrupts the layout of the entire analog circuit. This restraint inhibits the engineers from "fine tuning" the electronics unit.

The electronics unit implements the commands of the operator by adjusting the pitch and yaw control surfaces which guide the missile.

Another feature of these missiles is modularity. The various components making up. these missiles (e.g. the warhead, the electronics unit, the flight motor, the launch motor, etc.) are unique and separate modules. This use of modules permits the missile to not only be maintained easily, but also allows it to be component upgraded without undue re-engineering of the entire system.

In this regard, the traditional design for tube-launched operator-guided missiles has placed the electronics unit directly behind the warhead in a forward position on the missile. Because of the bulk of the analog electronic unit, space is not available for the electronics unit aft.

Also, because of an overall length restriction, the bulky electronics unit limited the volume available for the warhead. For some targets, the limited size of the warhead is a disadvantage.

Still another disadvantage is with the electronics unit in a forward position, the balance of the missile is adversely affected. Compensating ballast is required in the aft section. This ballast only added to the weight considerations which required compensation in other areas (sometimes further reducing the warhead size).

It is clear from the forgoing that the present analog electronics unit creates many engineering problems which hinder the ready upgrade of tube-launched operator-guided missiles.

US Patent US-A-3 008 668 describes a missile guidance system incorporating an accelerometer within the missile. A computer provides control signals for steering the missile in response to signals from the accelerometer and radar signals transmitted from the launching site.

US Patent US-A-3 900 843 describes apparatus for controlling the movement of a missile using a gyro, wherein deviations of the gyro axis from the axis of the missile are sensed optically and used to correct the movement of the missile.

Reference is hereby directed to co-pending European Patent Application EP-A-0 412 654 which describes subject-matter similar to that of the present invention.

### SUMMARY OF THE INVENTION

In accordance with the present invention, there is provided an electronics unit for a missile as defined in claim 1.

The invention extends to an operator guided missile incorporating such an electronics unit and an operator guided missile system incorporating such an operator guided missile.

The present invention replaces the purely analog electronics unit with a hybrid analog/digital electronics unit. This hybrid electronics unit: permits not only easy modification of the electronics unit (through software changes to the digital micro-controller); but, also reduces the size of the electronics unit to such an extent that it fits into the aft section of the missile.

Movement of the electronics unit to the aft permits the warhead to be increased, reduces the need for aft ballast, and generally produces a more powerful missile.

The hybrid electronics unit of the present invention utilizes the analog signals from the operator together with the missile's own internal positional signals generated by the yaw and roll gyros to manipulate the yaw and pitch control surfaces.

Any subsequent engineering changes to the electronic "brains" are easily accomplished by simply modifying the internal software of the digital microprocessor.

### BRIEF DESCRIPTION OF THE DRAWINGS

Figure 1 is a functional block diagram of the preferred embodiment.

Figure 2 is an electronic schematic of the positional status determination mechanism first described in figure 1.

Figure 3 is an electronic schematic of the decoding circuit for the operator generated signal first described in figure 1.

Figures 4a and 4b are wiring diagrams of the micro-controller first described in Figure 1.

Figure 5 is an electronic schematic illustrating the handling of the signal used to control pitch and yaw.

Figure 6 is an electronic schematic illustrating the handling of the signal used to control pitch and yaw and completing the objectives of the circuitry of Figure 5.

Figure 7 is a cut-away view of an embodiment of the invention when implemented into a missile and a missile system.

### DESCRIPTION OF THE PREFERRED EMBODIMENTS

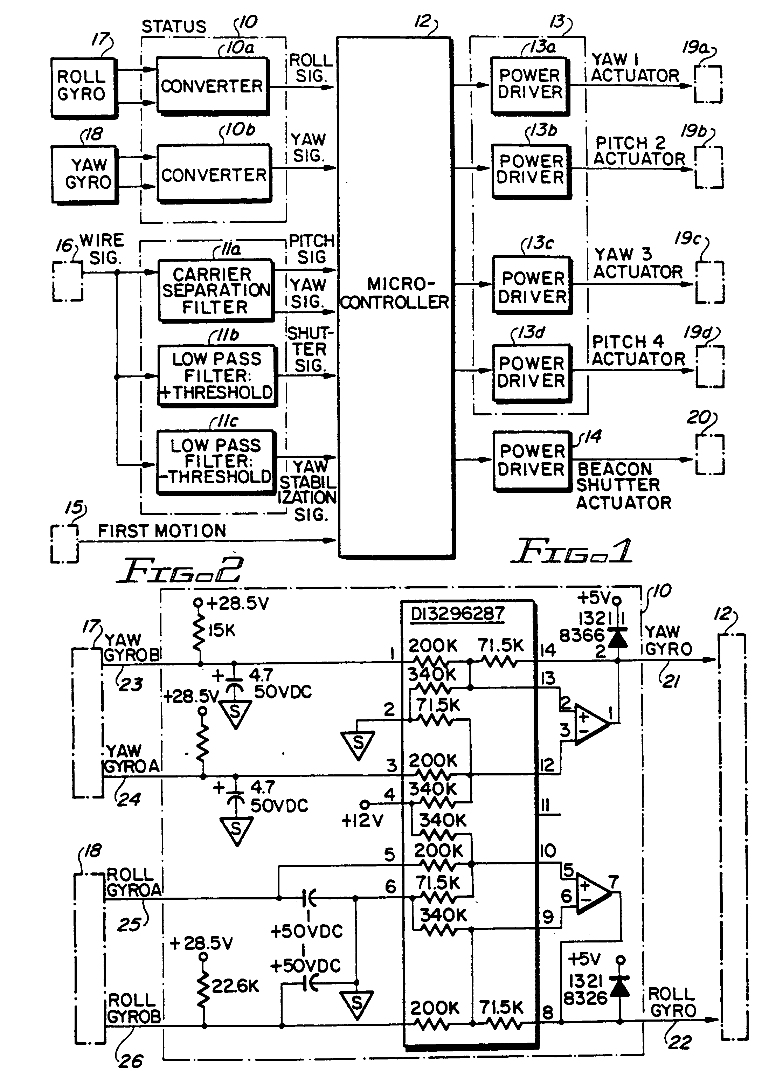

Figure 1 illustrates, in block form, the operation of the preferred embodiment of this invention. At the center of the operation is the micro-controller 12. Utilizing it's software, the micro-controller 12 is the "brains" of the operation.

In this capacity, micro-controller 12 must be cognizant of the missile's positional status. This information is derived by utilizing the signals from roll gyro 17 and the yaw gyro 18. Positional status mechanism 10 utilizes these signals for the generation of the roll signal and the yaw signal which are used by the micro-controller 12.

This task is accomplished by taking the signal from the roll gyro 17 and converting it via converter 10a into the roll signal. Similarly, the signal from the yaw gyro 18 is converted via converter 10b into the yaw signal to be used by the micro-controller 12.

Information as to the operator's instructions/ directions are communicated to the micro-controller 12 via the directional mechanism 11. The operator's directions are first translated by the missile launcher before being communicated to the missile. For purposes of this discussion, the translated signals are the operator's directions.

The operator feeds in the desired directions into operator interface 16. This directional information is communicated via a communication link (not shown) to the directional mechanism 11. The communication link is a continuous physical link (e.g. steel wire, copper wire, fiber optics, or the like) between the operator interface 16 and the missile.

Since the communication link is a single pair of wires, the signal from the operator must be broken into its component parts by the directional mechanism 11. This is accomplished by taking the incoming signal and passing it through a carrier separation filter 11a which generates the pitch signal and the yaw signal used by the micro-controller 12.

The shutter signal is obtained by the directional mechanism 11 through the use of a low pass filter with a positive threshold 11b. The shutter signal indicates that the operator desires to "close" the shutter on the beacon so that the location of the missile in flight can be visually obtained.

A low pass filter with negative threshold 11c obtains the yaw stabilization signal.

The final point of information required by the micro-controller 12 is obtained from the first motion switch 15. This switch 15 indicates when the missile has been launched so that the micro-controller 12 knows when manipulation of the missile is appropriate. Basically, the first motion signal initiates operation of the micro-controller 12.

Utilizing this information from the status mechanism 10 (roll signal and yaw signal), the directional mechanism 11 (pitch signal, yaw signal, shutter signal, and yaw stabilization signal), and the first motion switch 15 (first motion signal), the micro-controller 12 is capable of manipulating the missile through signals sent to the manipulation mechanism 13.

Manipulation mechanism 13 amplifies the signals from the micro-controller 12 and communicates the amplified signals to the proper control surface actuators. In the preferred embodiment, the actuators manipulate the control surfaces to affect the pitch and yaw of the missile in flight via the release of pressurized helium.

Operationally, the micro-controller 12 communicates four signals which pass through: power driver 13a to generate the Yaw 1 actuator signal manipulating actuator 19a; power driver 13b to generate the Pitch 2 actuator signal manipulating actuator 19b; power driver 13c to generate the Yaw 3 actuator signal manipulating actuator 19c; power driver 13d to generate the Pitch 4 actuator signal manipulating actuator 19d. These power drivers are the preferred mechanisms for the means for amplifying the signals.

In a similar manner, shutter 20 is manipulated by the micro-controller 12 through a signal which is amplified by power driver 14 creating the beacon shutter actuator signal.

In this manner, the objectives of the operator are quickly and easily translated into their proper sequence of missile manipulations.

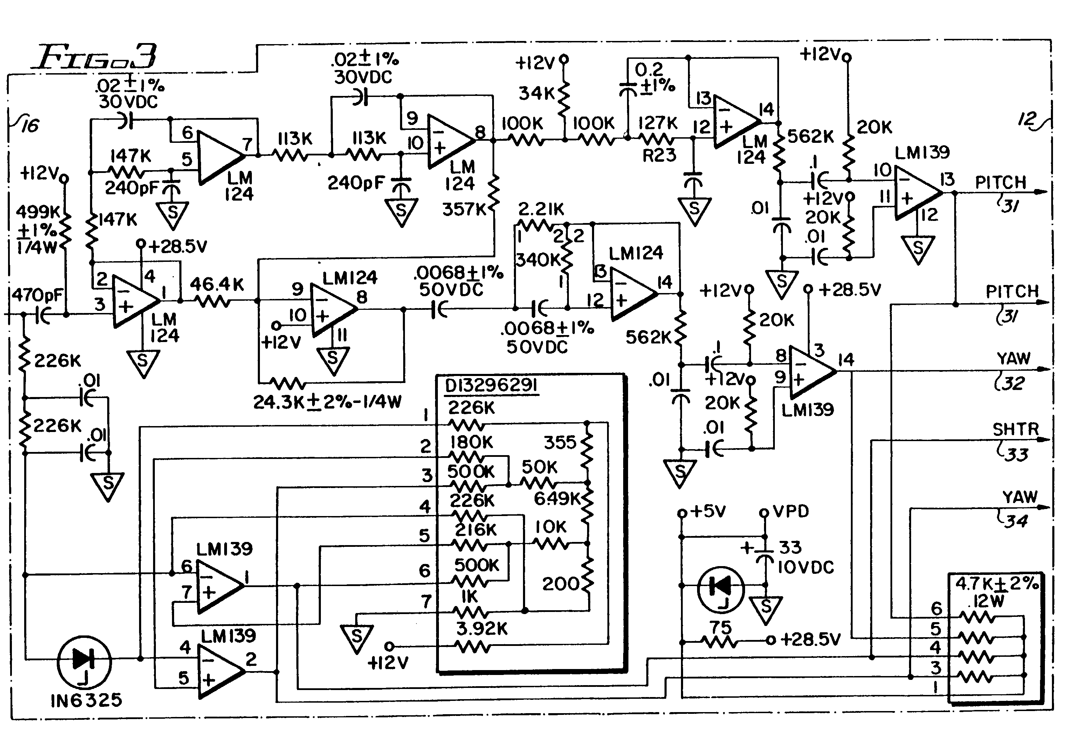

Figure 2 is an electronic schematic of the preferred embodiment of the status mechanism first described relative to Figure 1.

Signals from the roll gyro 17 and the yaw gyro 18 are communicated to the circuit illustrated in Figure 2, the positional status mechanism 10. Those of ordinary skill in the art readily recognize various gyros which may be used in this context.

The yaw gyro signal-A 23, the yaw gyro signal-B 24, the roll gyro signal-A 25, and the roll gyro signal-B 26, are manipulated and a yaw gyro signal 21 and roll gyro signal 22 is communicated to micro-controller 12.

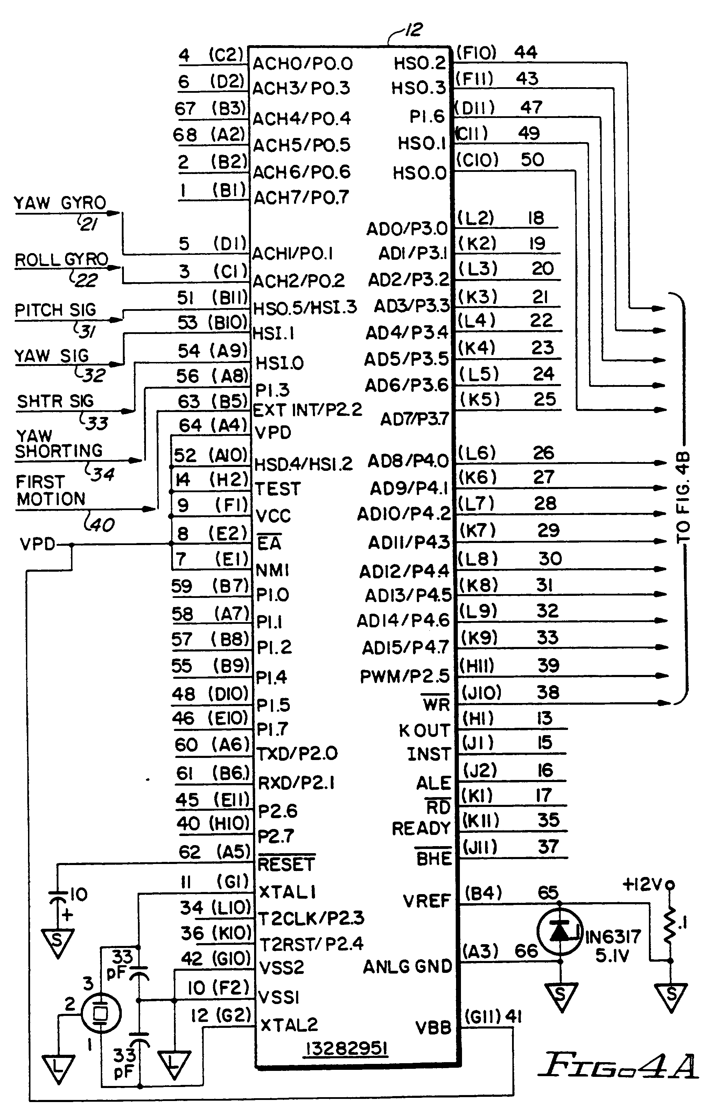

Figure 3 illustrates the preferred embodiment of the circuit used to create the directional mechanism 11. The directional mechanism 11 accepts the signals indicative of the operator's directions, from operator interface 16 (shown in figure 1).

The wire signals from the operator interface 16 are handled by three substantially independent circuits to establish the pitch signal 31 and the yaw signal 32, together with the shutter signal 33, and the yaw shorting signal 34. These four signals are communicated to micro-controller 12.

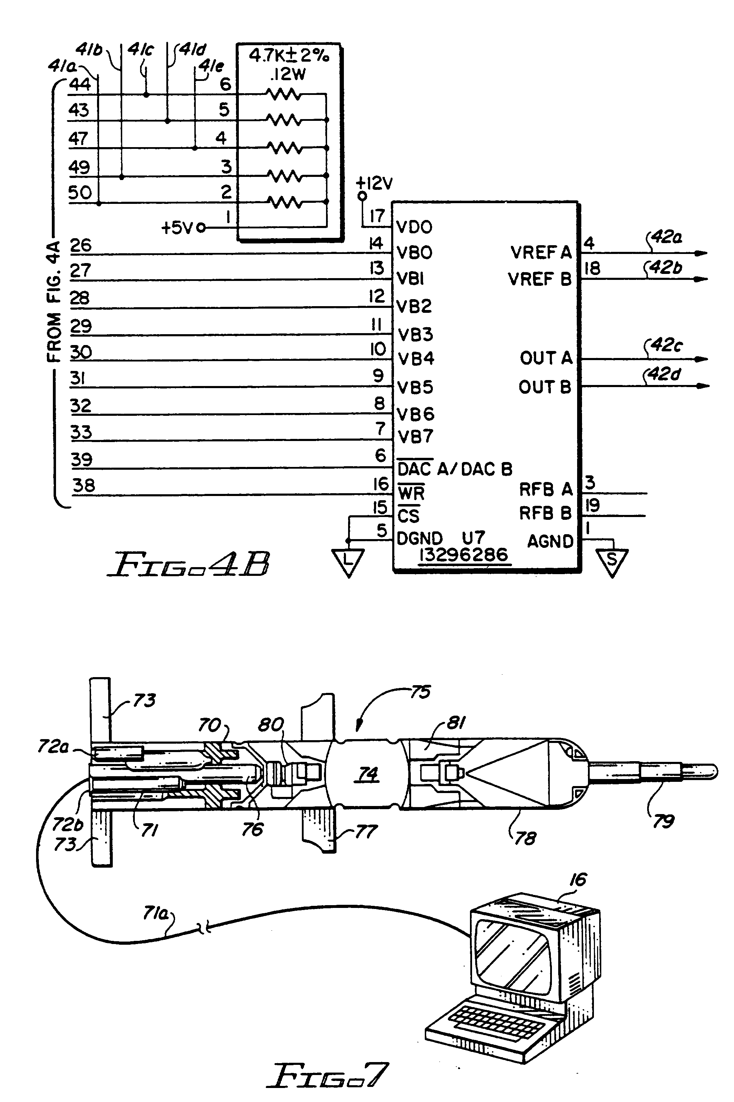

Figures 4a and 4b illustrate the use of the signals from the positional status mechanism 10 and the directional mechanism 11 by the micro-controller 12. The yaw gyro signal 21 and the roll gyro signal 22 (as illustrated in figure 2), pitch signal 31, yaw signal 32, shutter signal 33, and yaw shorting signal 34 (as illustrated in figure 3) are combined with the first motion signal 40 within the micro-controller 12 to generate the control signals 41a, 41b, 41c, 41d, and 41e; also generated are control signals 42a, 42b, 42c, and 42d.

In this manner, the positional status of the missile is combined with the directions from the operator for proper manipulation of the missile in flight.

The first motion signal 40 is received from a switch and tells micro-controller 12 that the missile is in flight. It is at this time that control of the missile is feasible for the micro-controller 12.

In the preferred embodiment, the micro-controller 12 is a microprocessor, part number 8797 BH, commercially available from Intel Corporation. Stored within the micro-controller 12 is the software (described by the following Table A, Macro Assembly language for the Intel 8797 BH) to manipulate the incoming signals and perform the correct function with them.

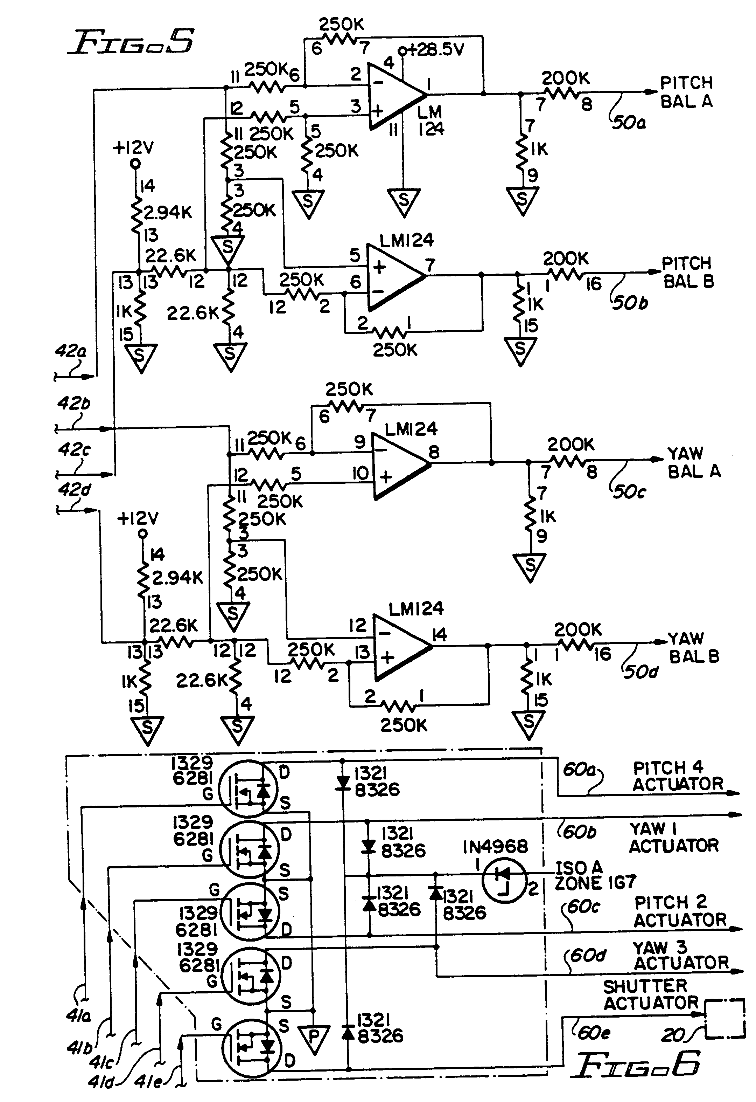

Figure 5 illustrates the preferred embodiment of the circuitry used to take the control signals 42a, 42b, 42c, and 42d (originally described in figures 4a and 4b), and generate the various balance signals. This includes the pitch balance-A 50a, pitch balance-B 50b, yaw balance-A 50c, and yaw balance-B 50d.

These signals are used to align the launcher control signal to the missile electronics and are disconnected at the missile's first motion.

The remaining control signals, as first described in figure 4, are handled by the circuitry shown in Figure 6.

Control signals 41a, 41b, 41c, and 41d are amplified to generate the pitch 4 actuator signal 60a, the yaw 1 actuator signal 60b, the pitch 2 actuator signal 60c, and the yaw 3 actuator signal 60d. These signals are communicated to the appropriate actuators, as is obvious to those of ordinary skill in the art, for the manipulation of the control surfaces for in-flight control.

The control signal 41e is amplified by the circuitry of figure 6 which becomes the shutter actuator signal 60e and is communicated to the shutter actuator 20 for manipulation. This "closing" of the shutter permits the operator to identify the missile during flight since the beacon is "flashed" for visual identification.

Figure 7 illustrates the missile and missile system of the preferred embodiment.

The missile's components are contained within a body 70 with control surfaces 73. Wings 77 assist the control surfaces 73 in maintaining and directing the missile during flight.

Beacons 72a and 72b assist the launcher to identify and track the missile after launch. A shutter (not shown) is manipulatable by the launcher so that the missile's beacon 72a can be identified in a busy battle field.

Also within missile 75 is warhead 78, extensible probe 79, flight motor 74, and launch motor 76. These components are well known in the art and their functions are as their titles indicate.

Permitting the operator interface 16 to communicate with the missile 75 is the communication link, composed of wire dispensers 71 and wire 71a. Wire 71a is a steel wire. In other tube-launched missiles, the wire 71a may be fiber optic or a copper wire.

In this manner, the operator communicates directions to the missile 75 via the operator interface 16 and communication link 71 and 71a. The directions from the operator are combined with the positional status of the missile by the electronics unit 81 to properly manipulate the control surfaces 73.

It is clear from the forgoing that the present invention creates a superior and more versatile missile.

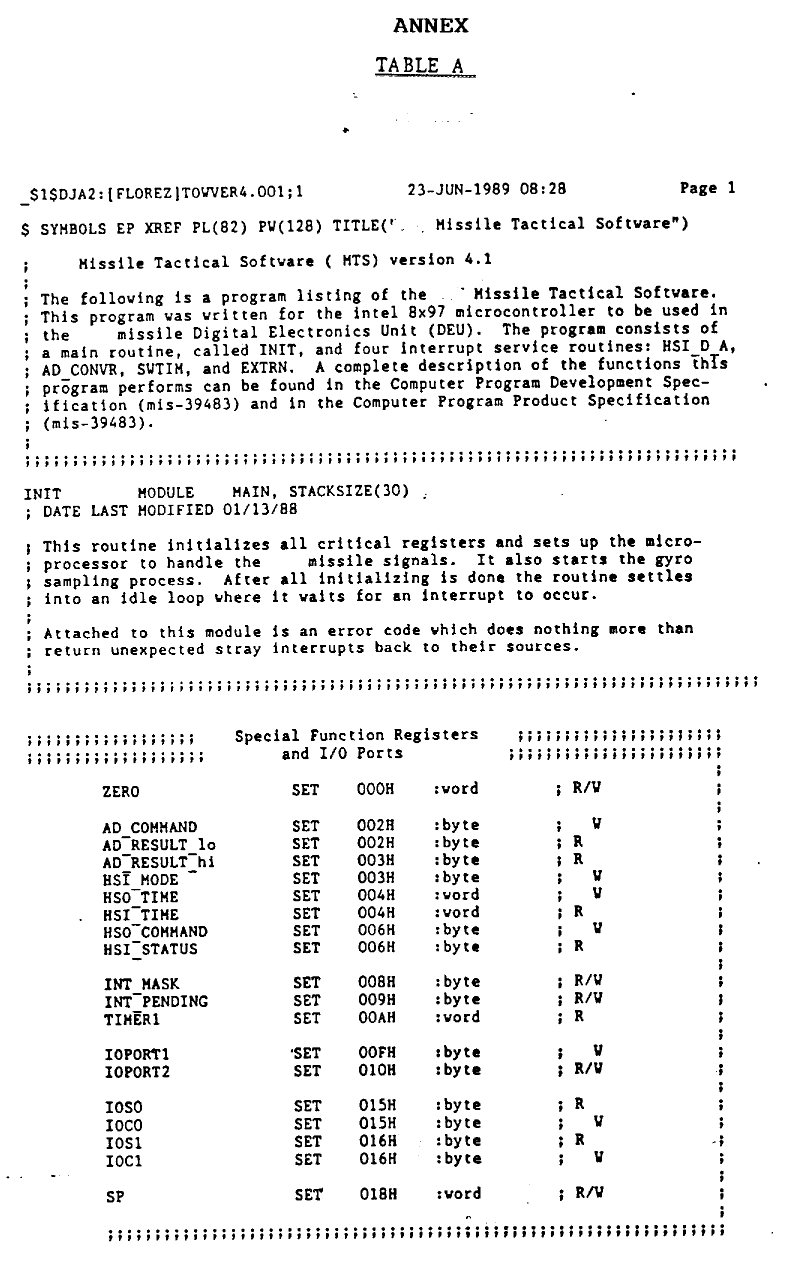

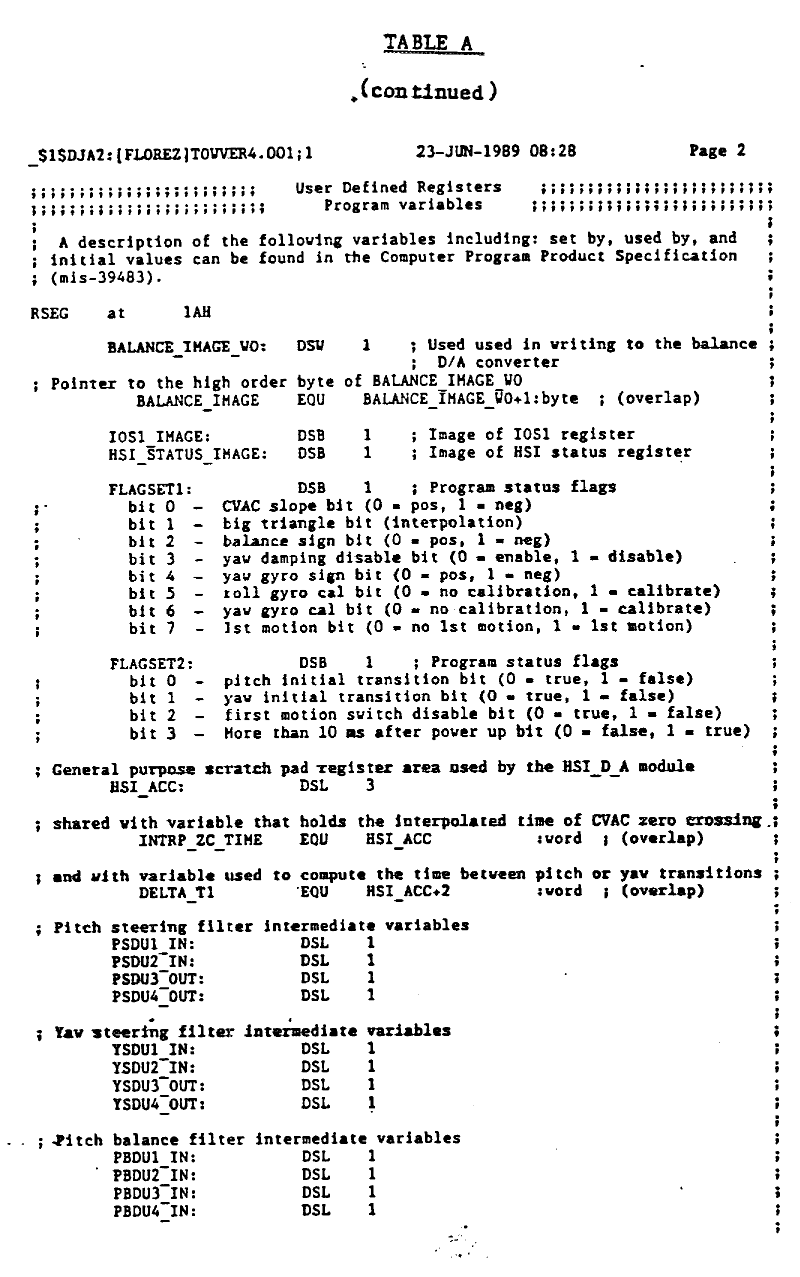

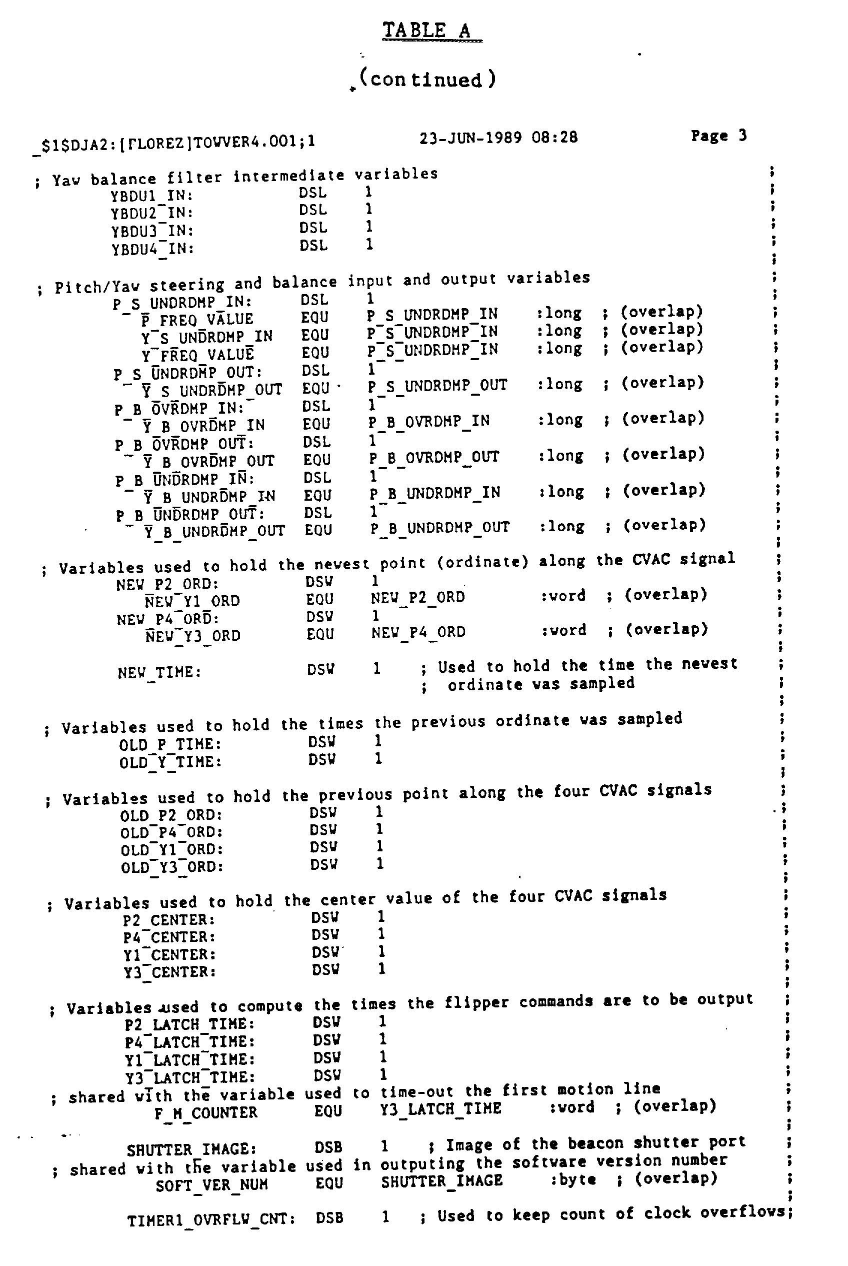

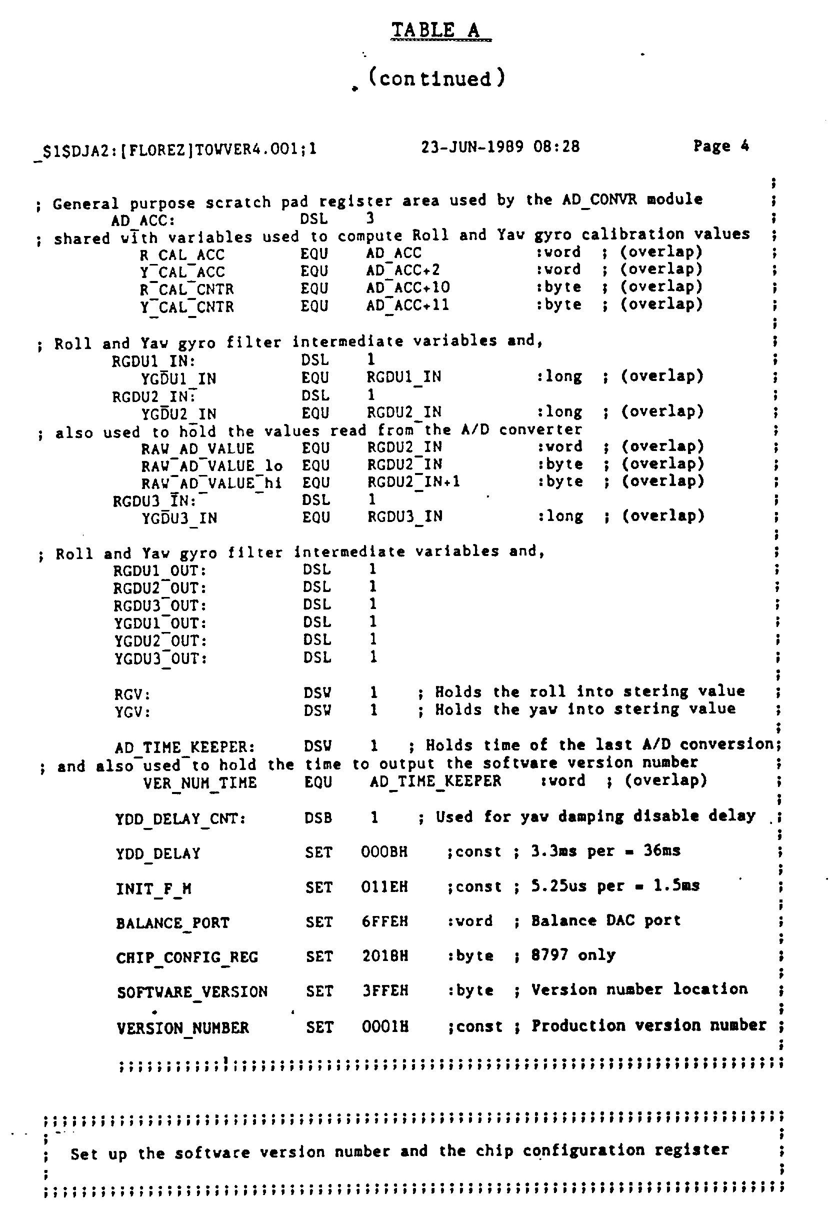

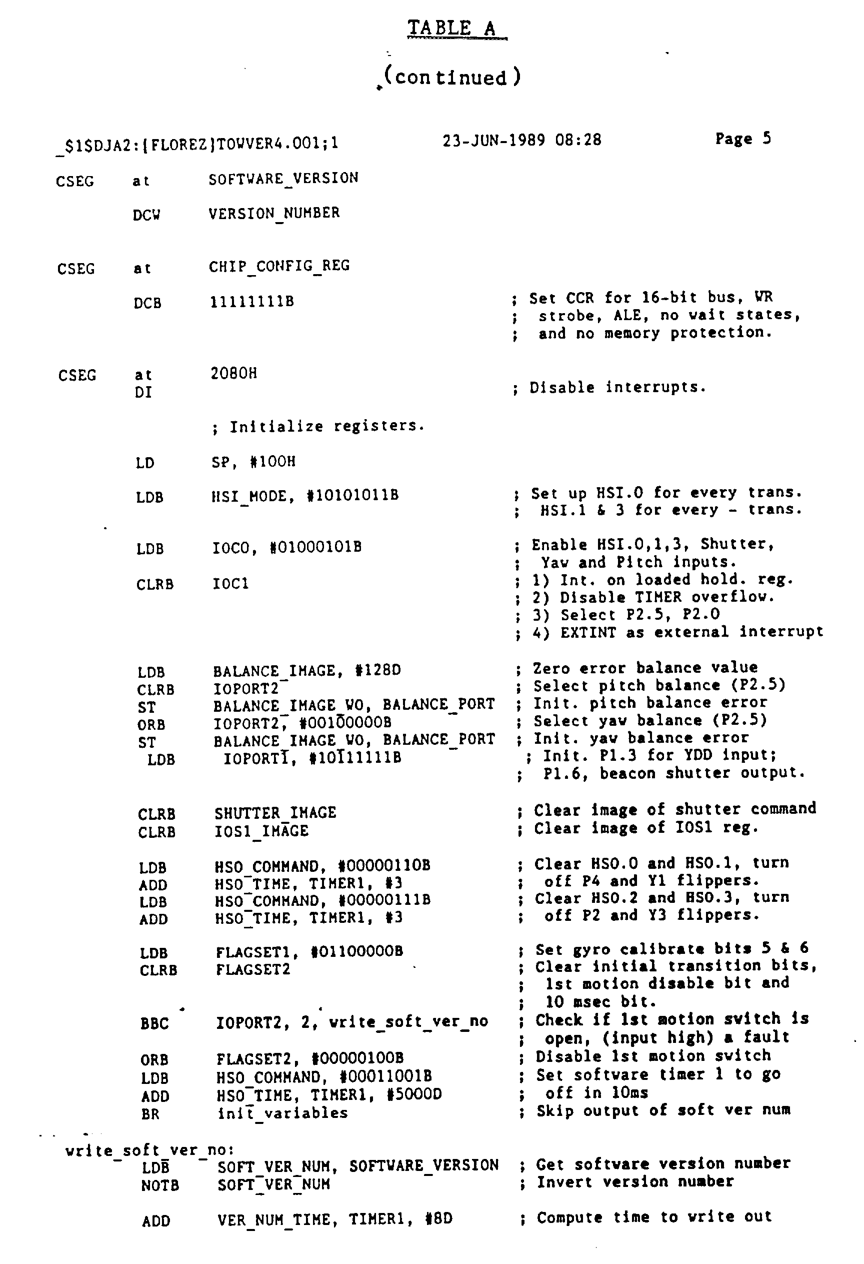

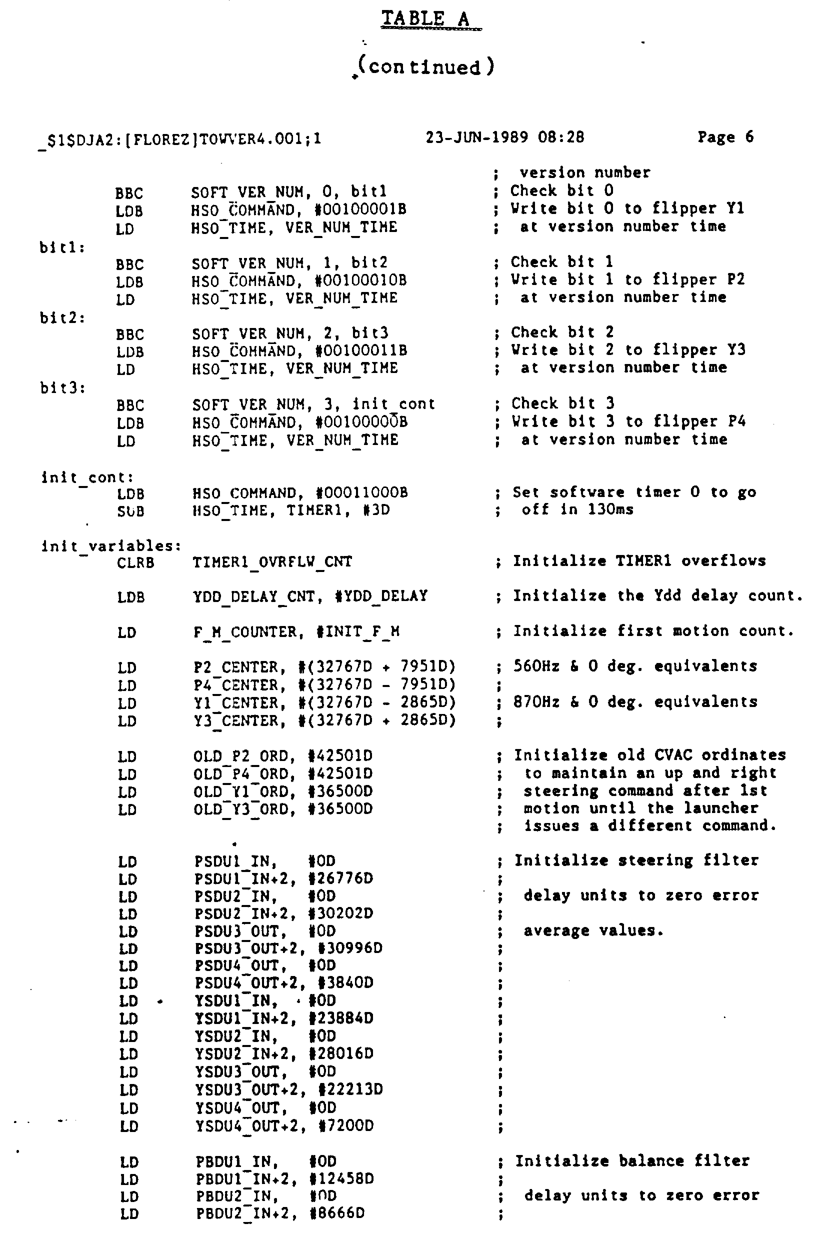

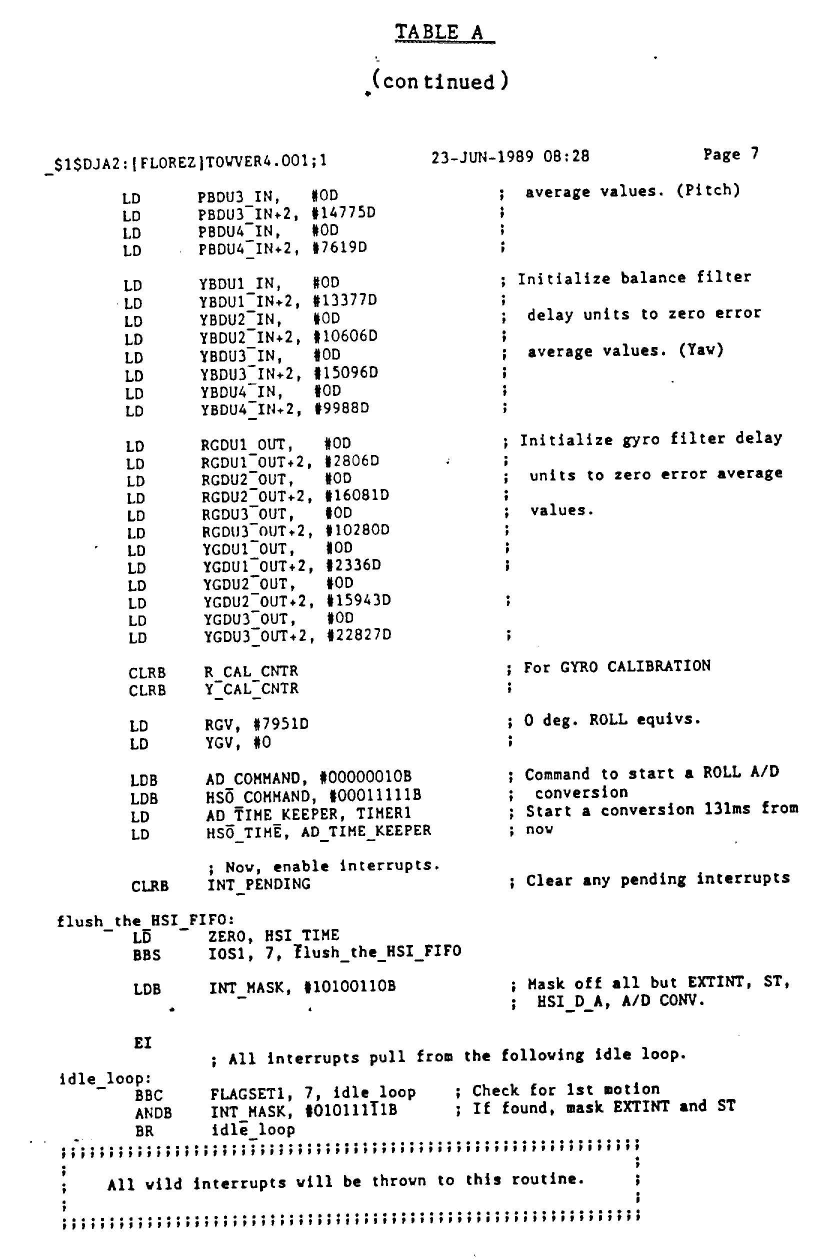

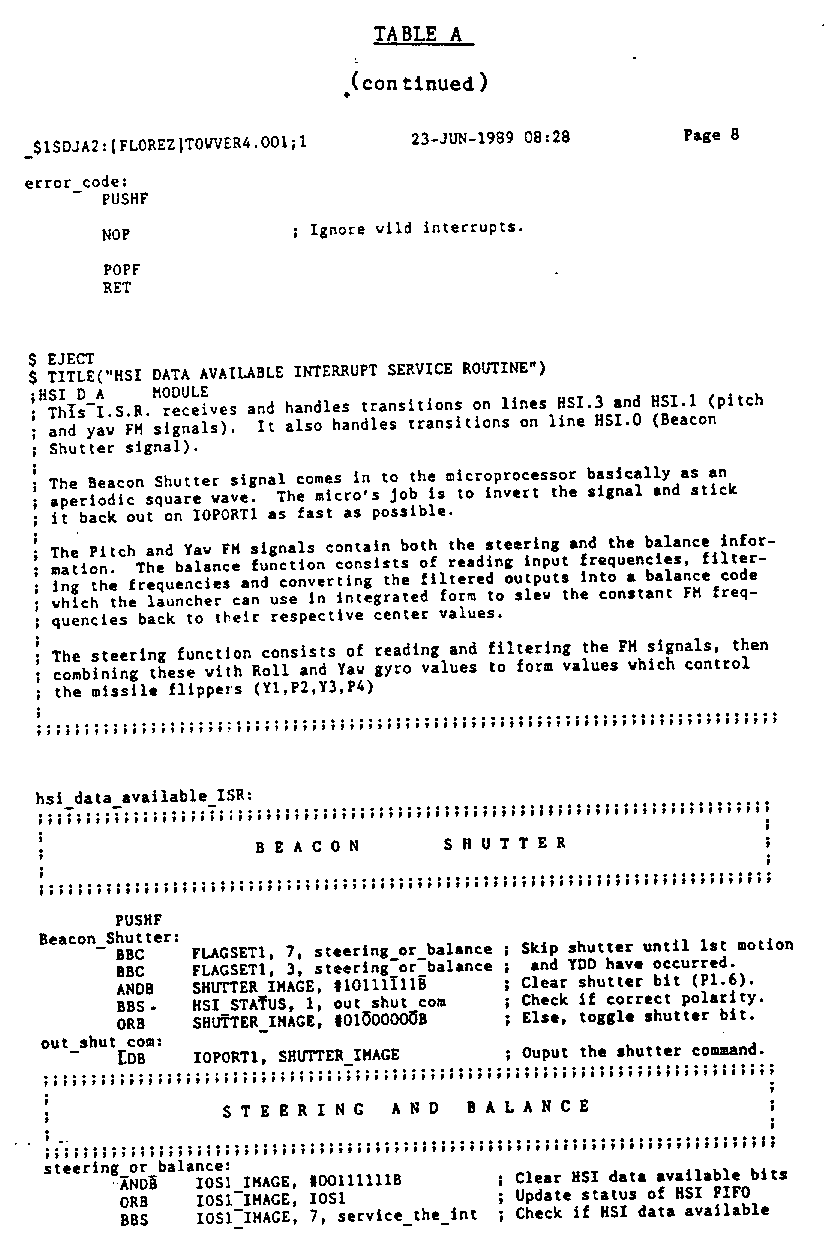

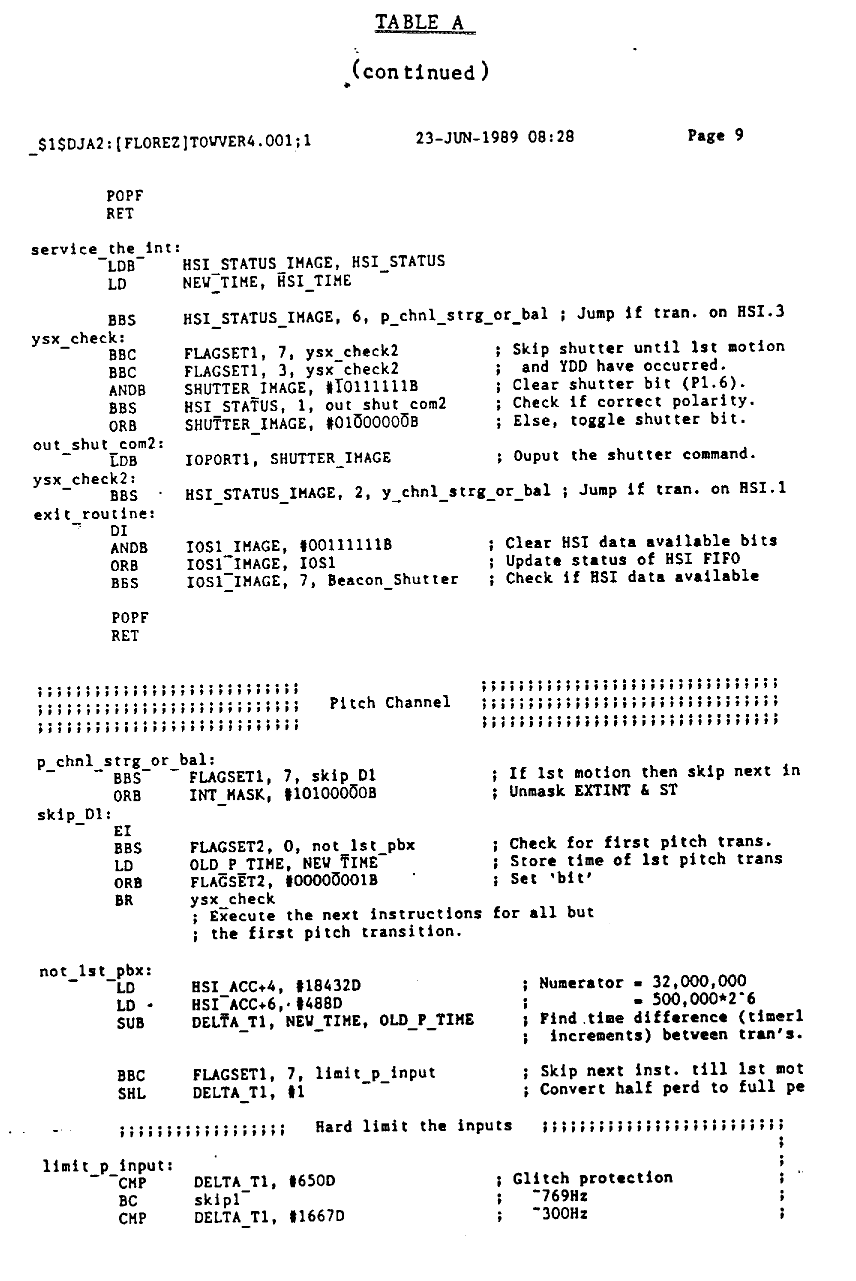

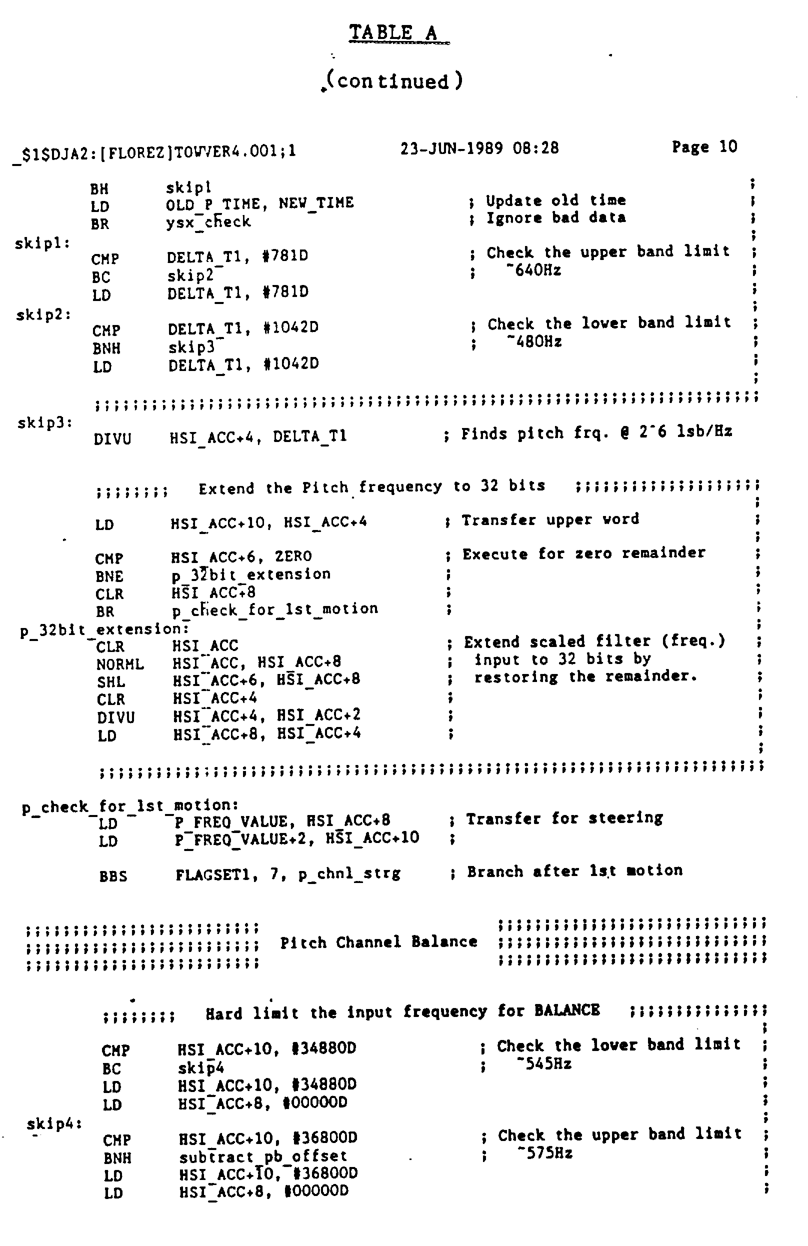

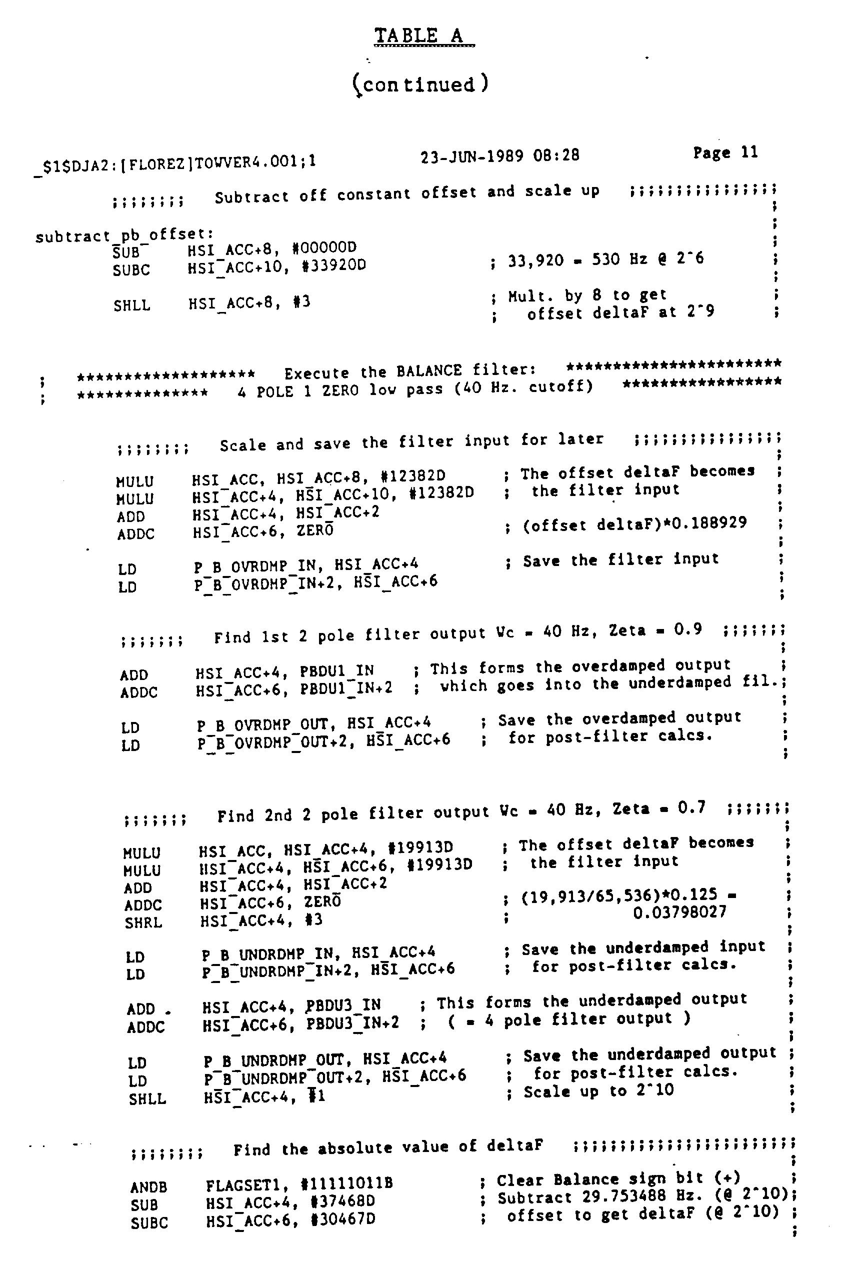

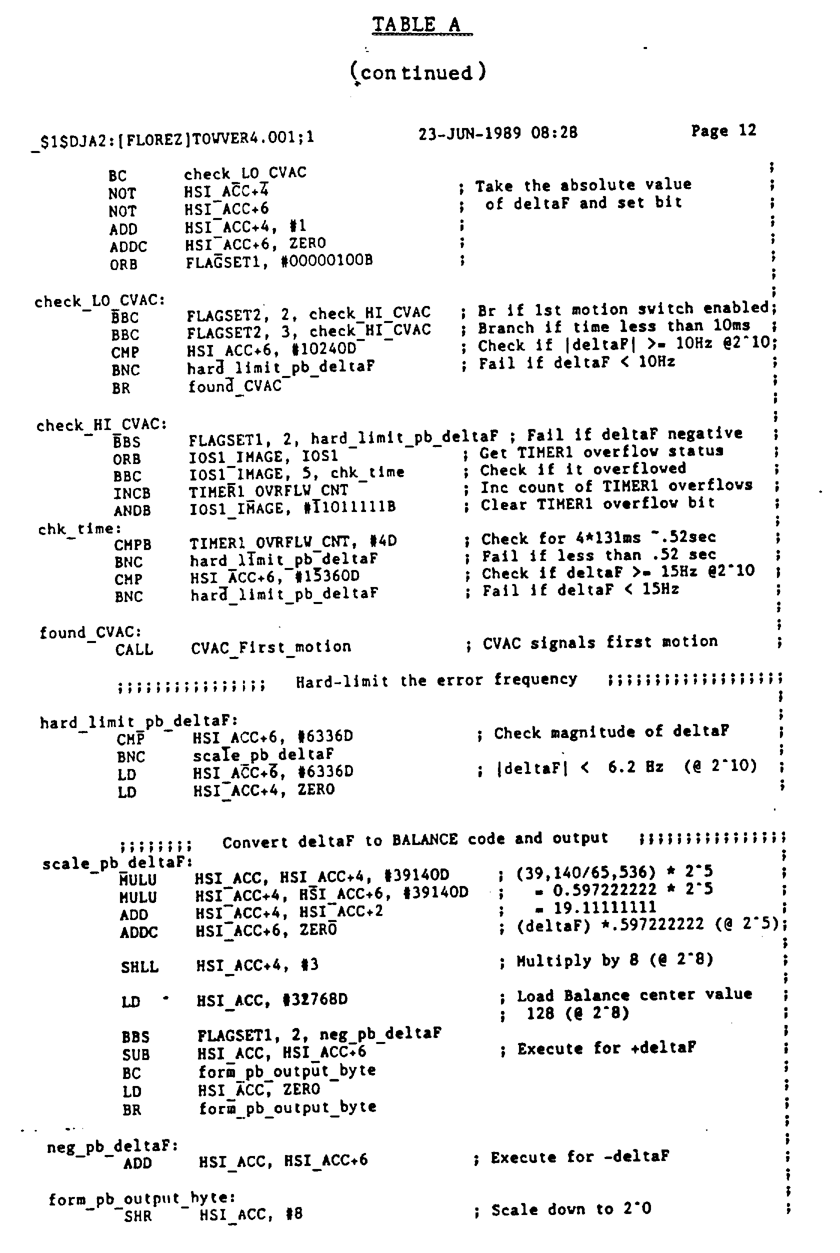

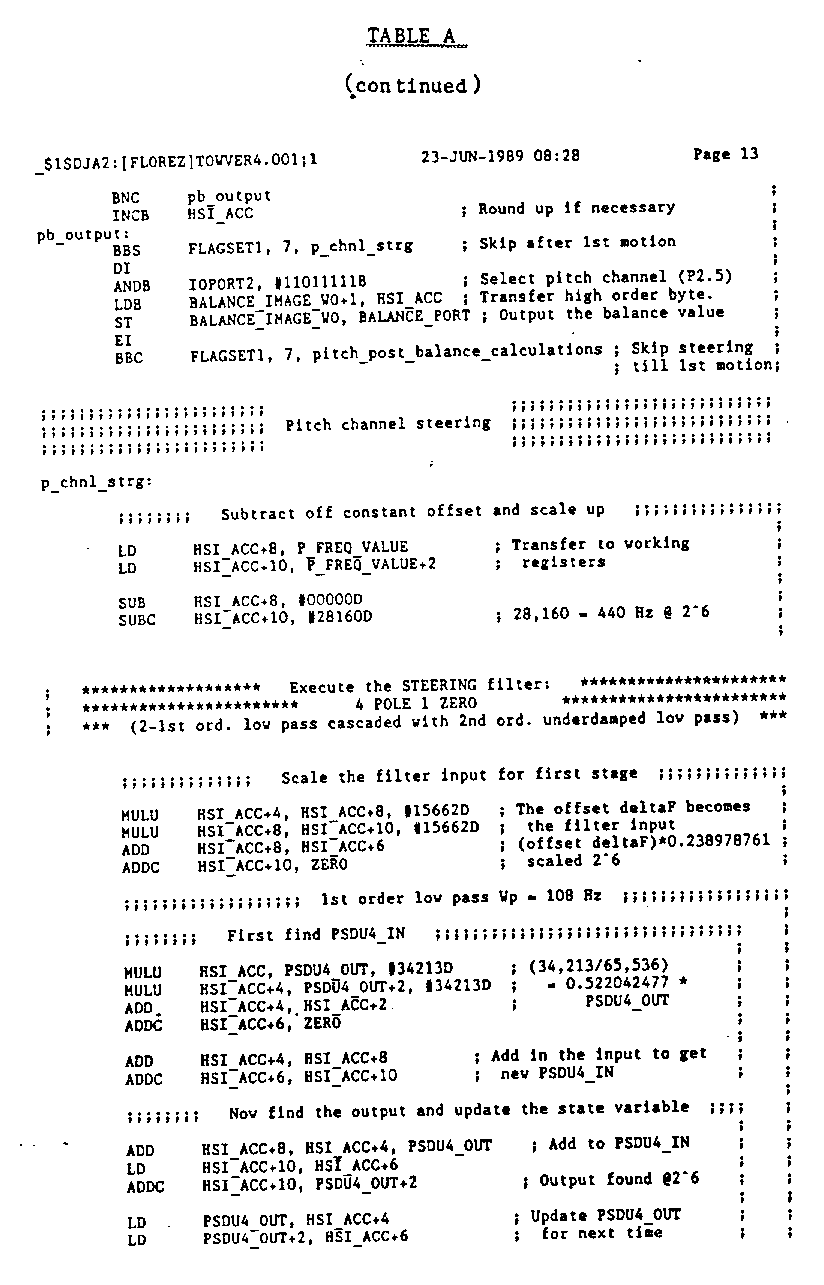

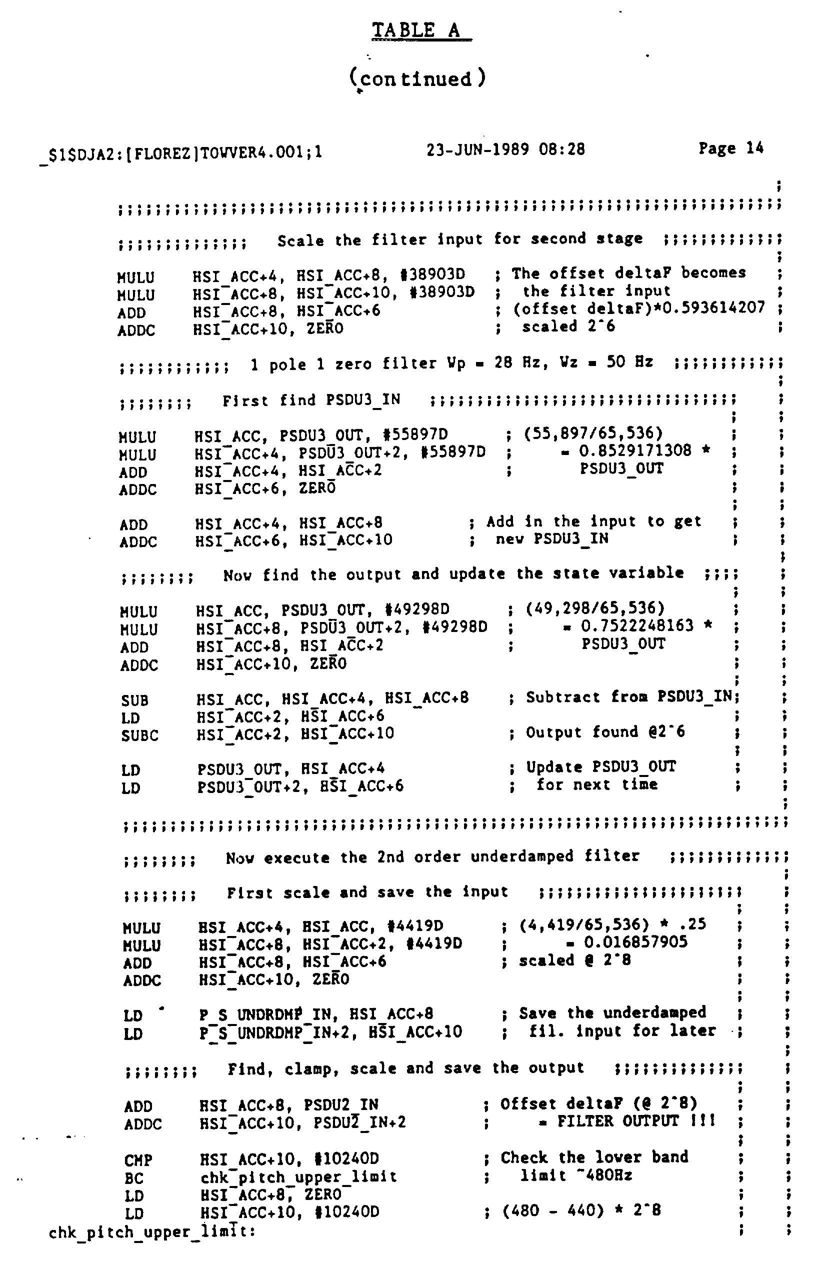

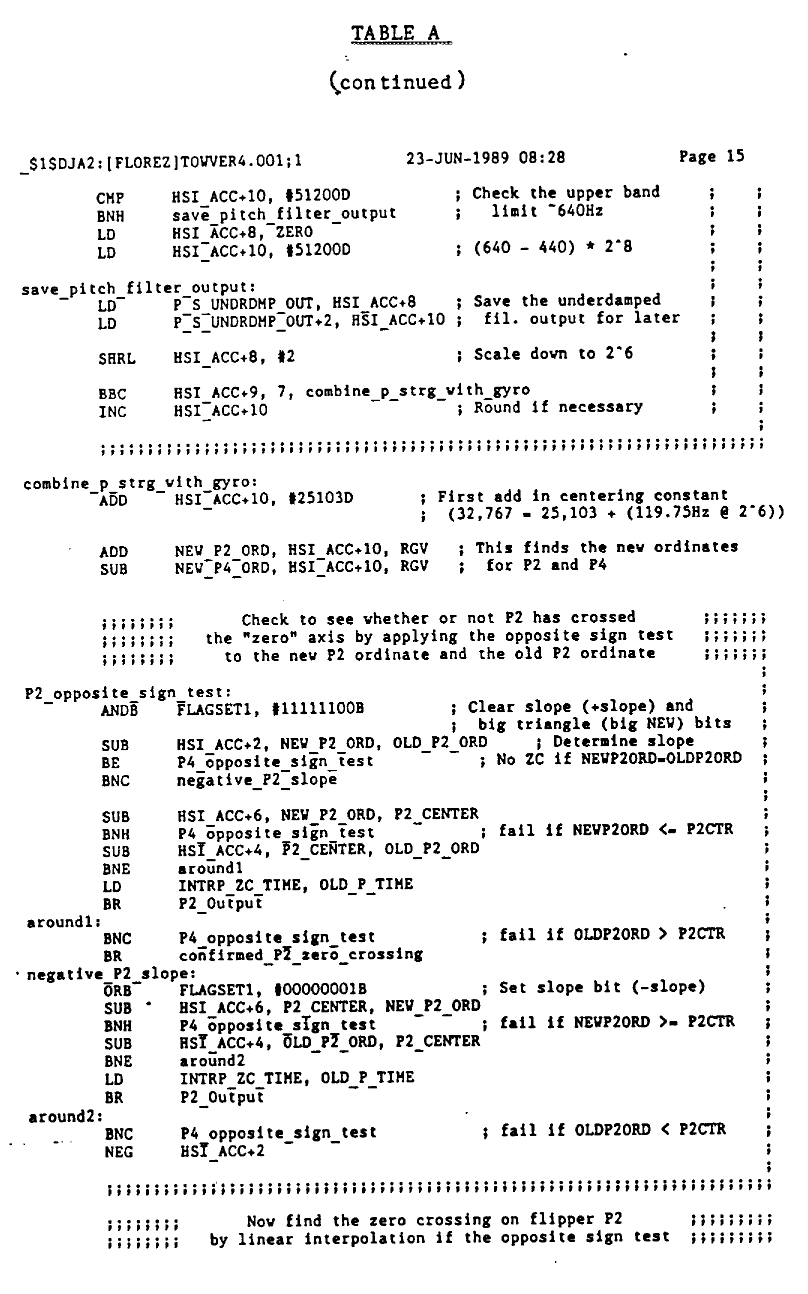

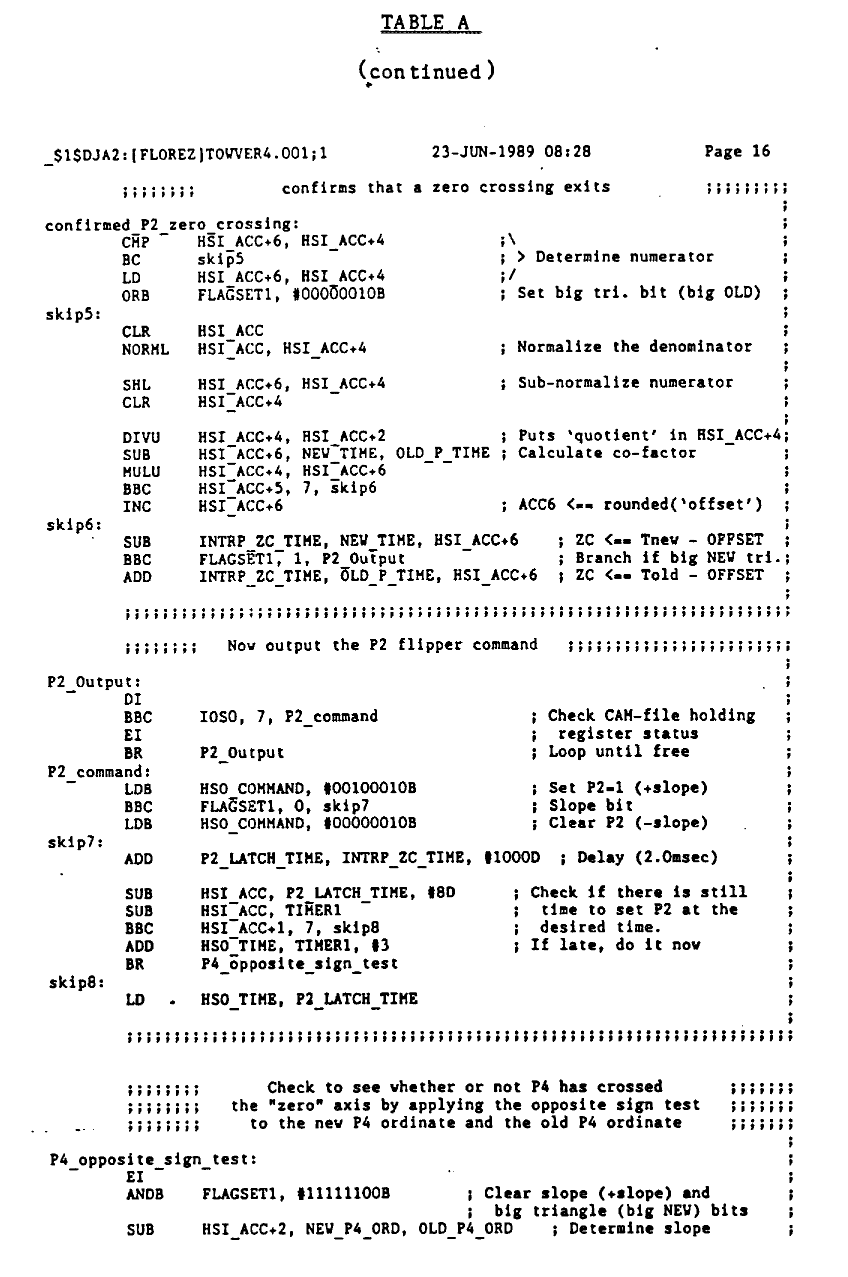

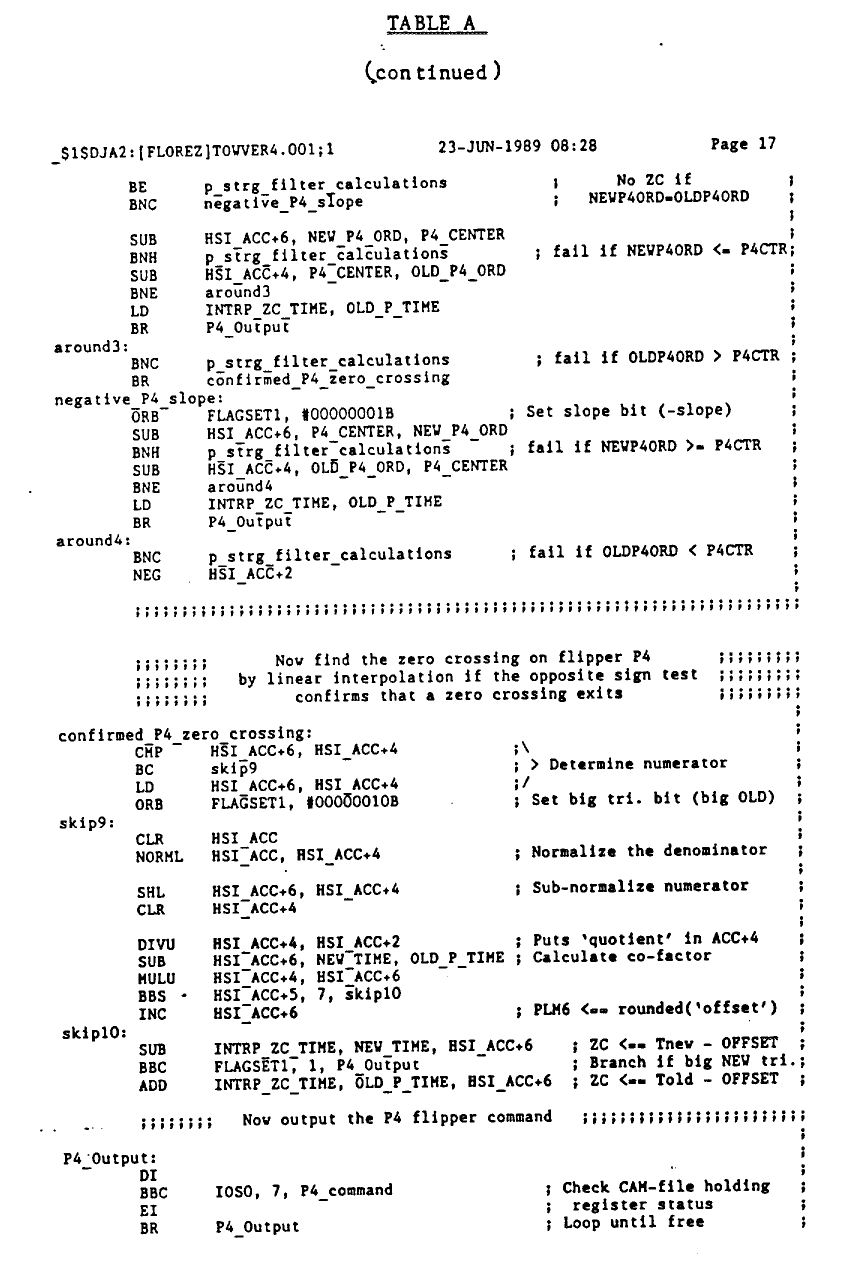

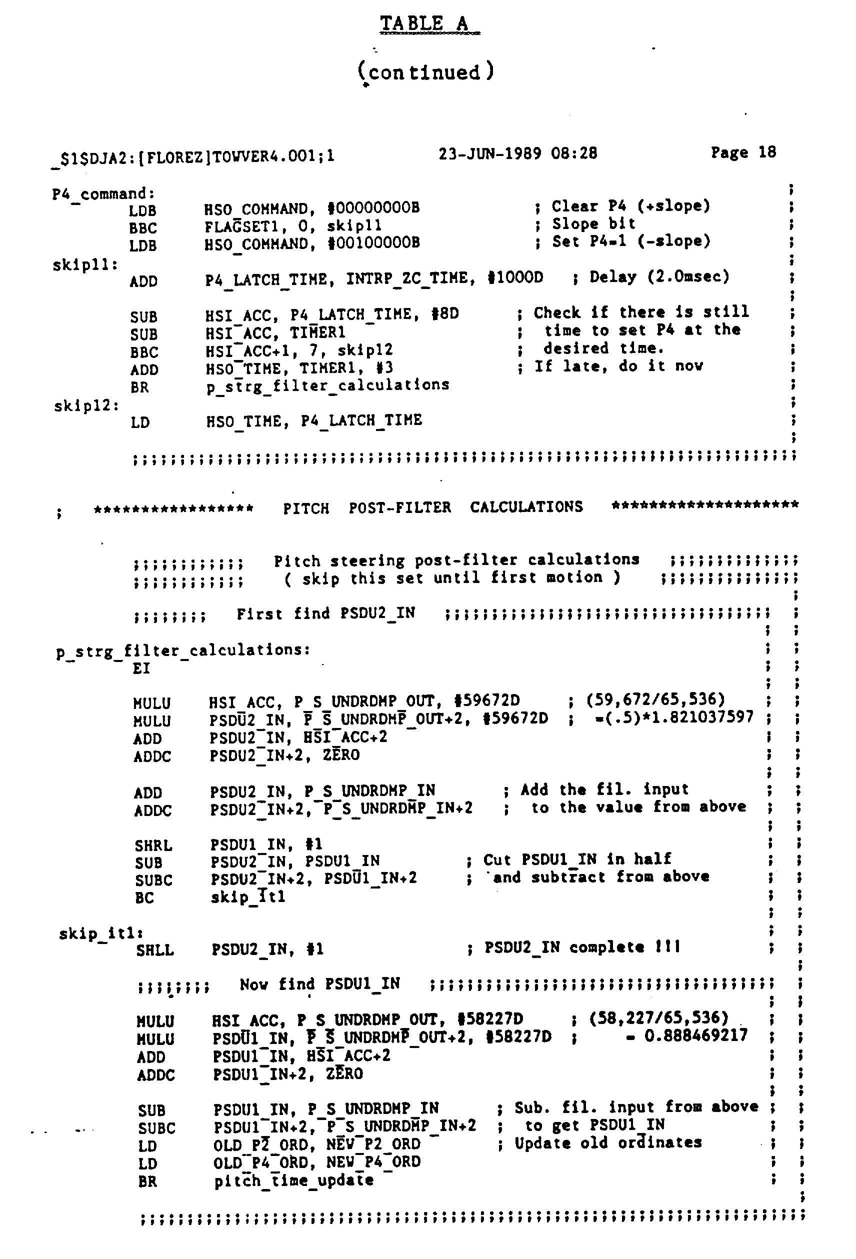

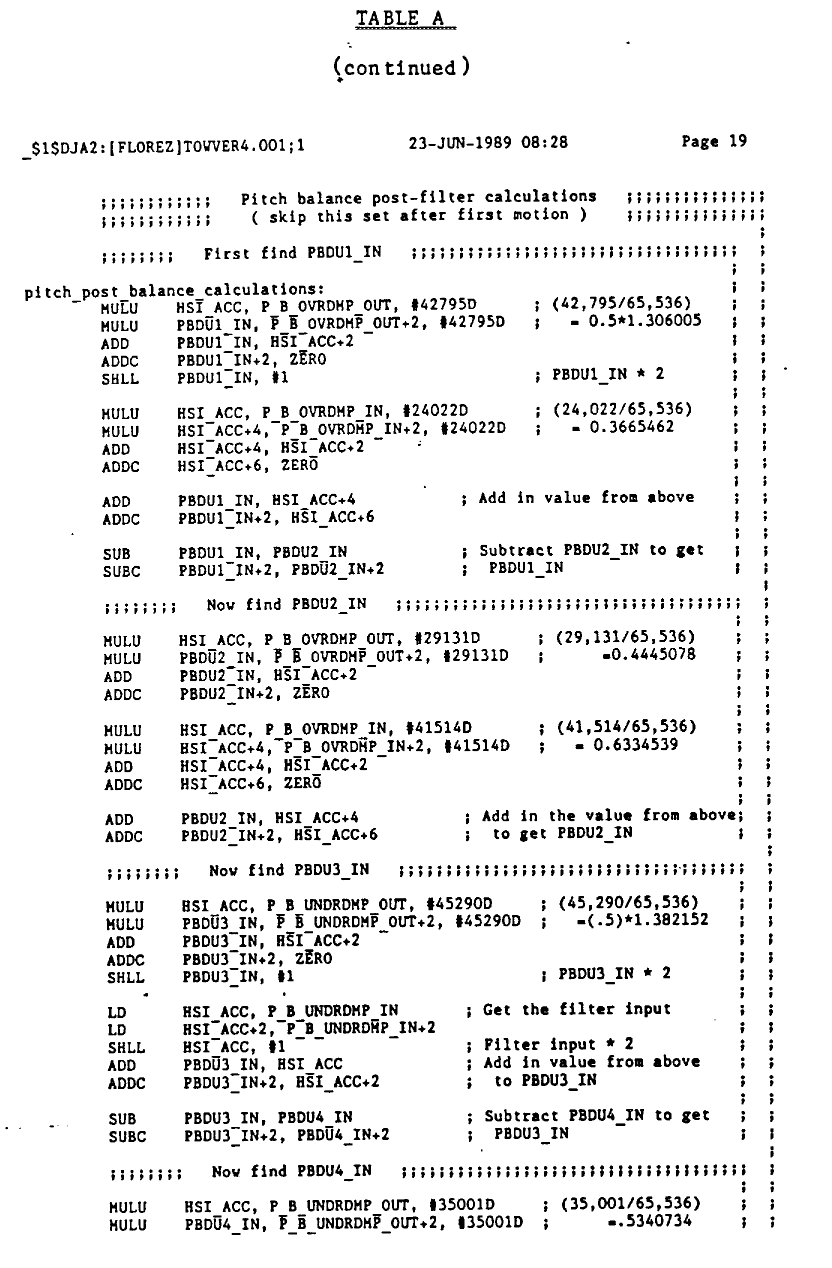

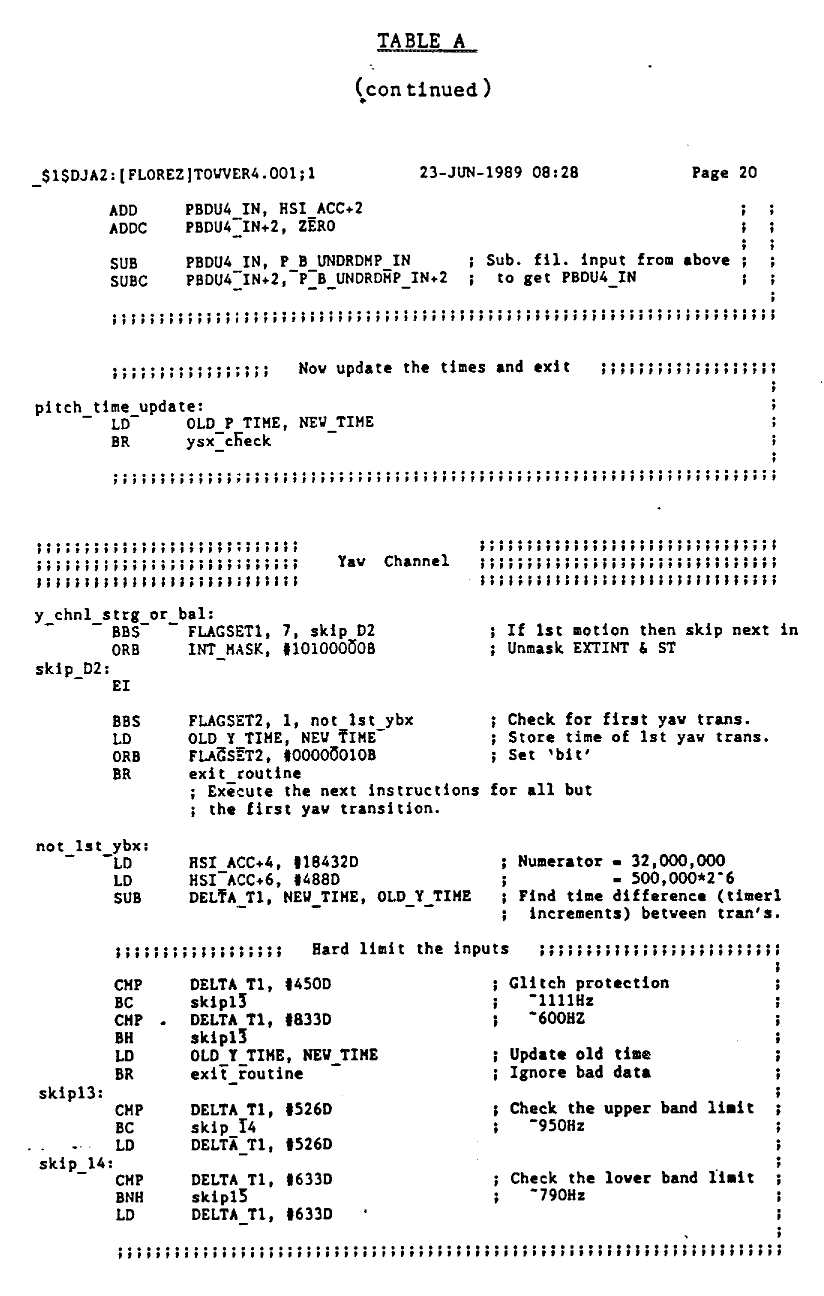

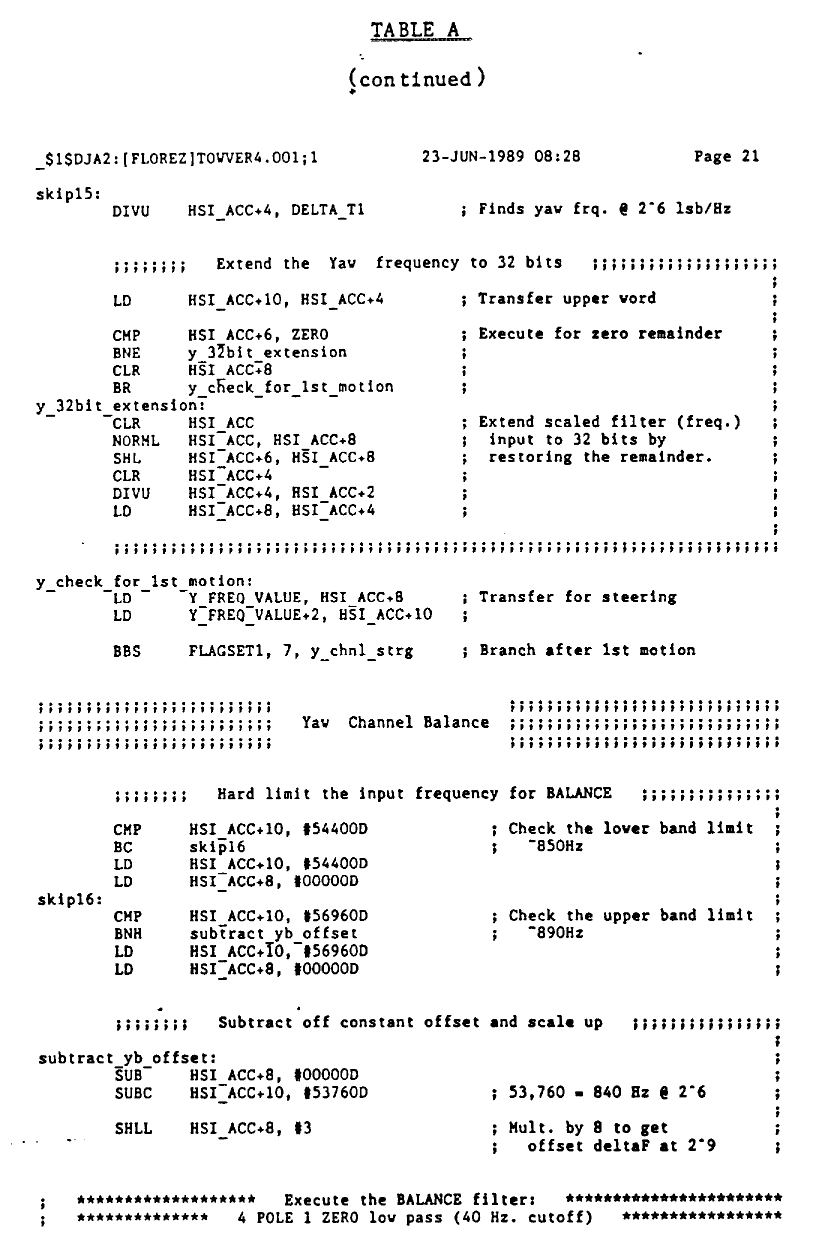

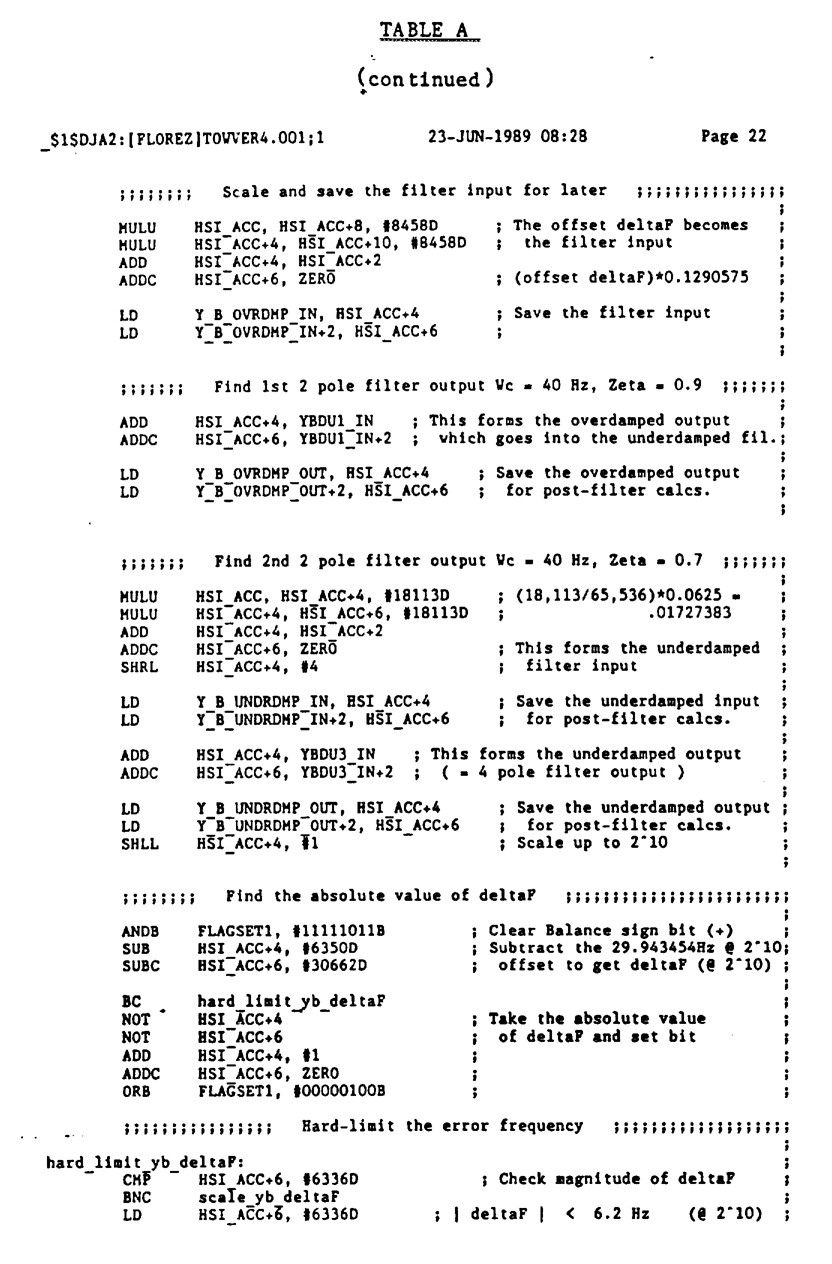

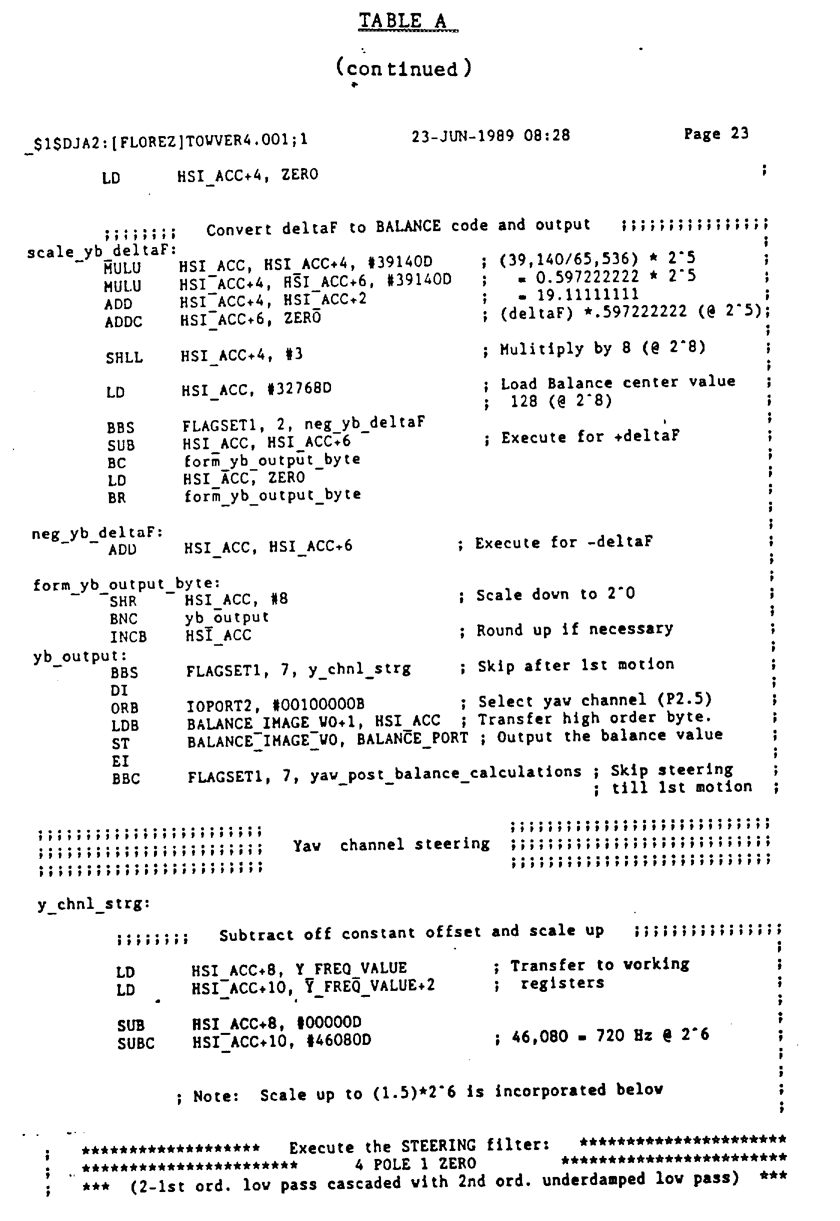

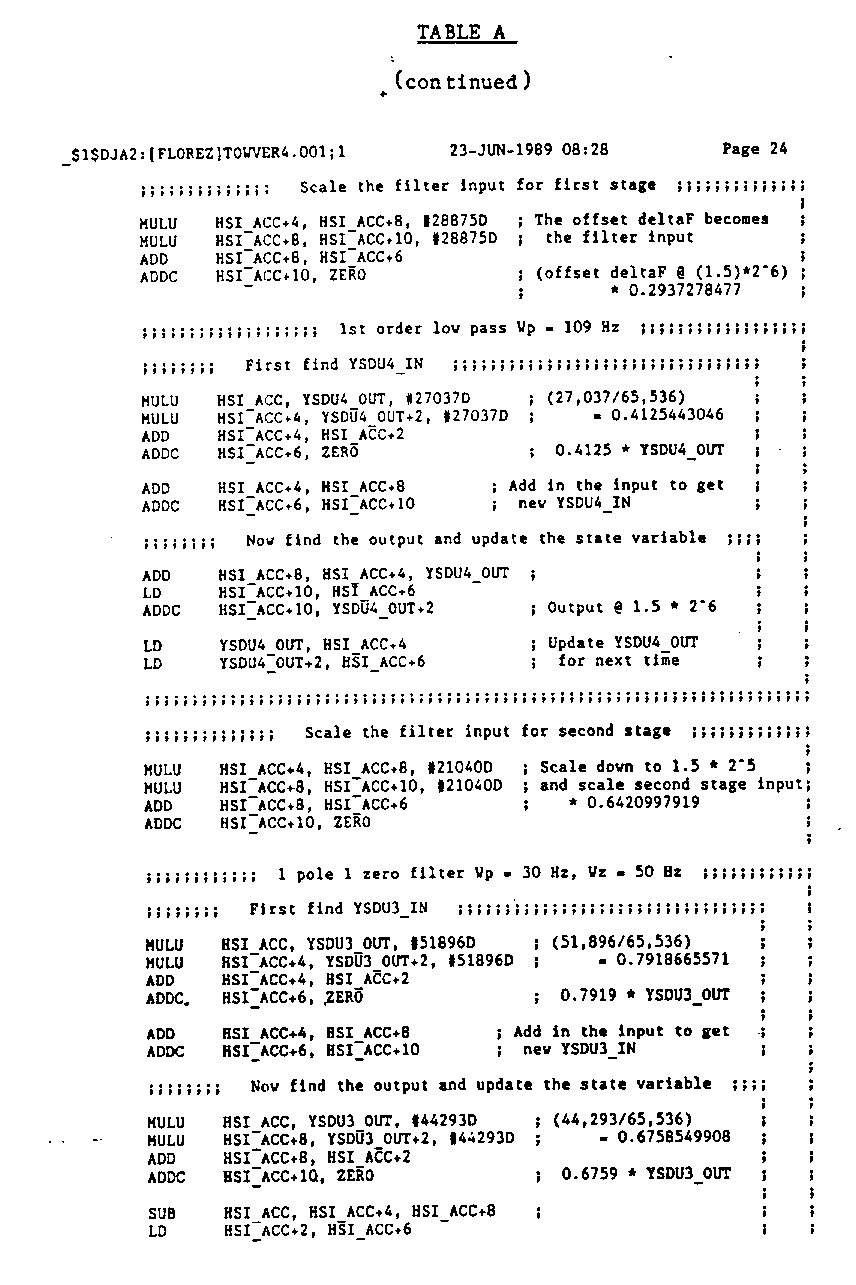

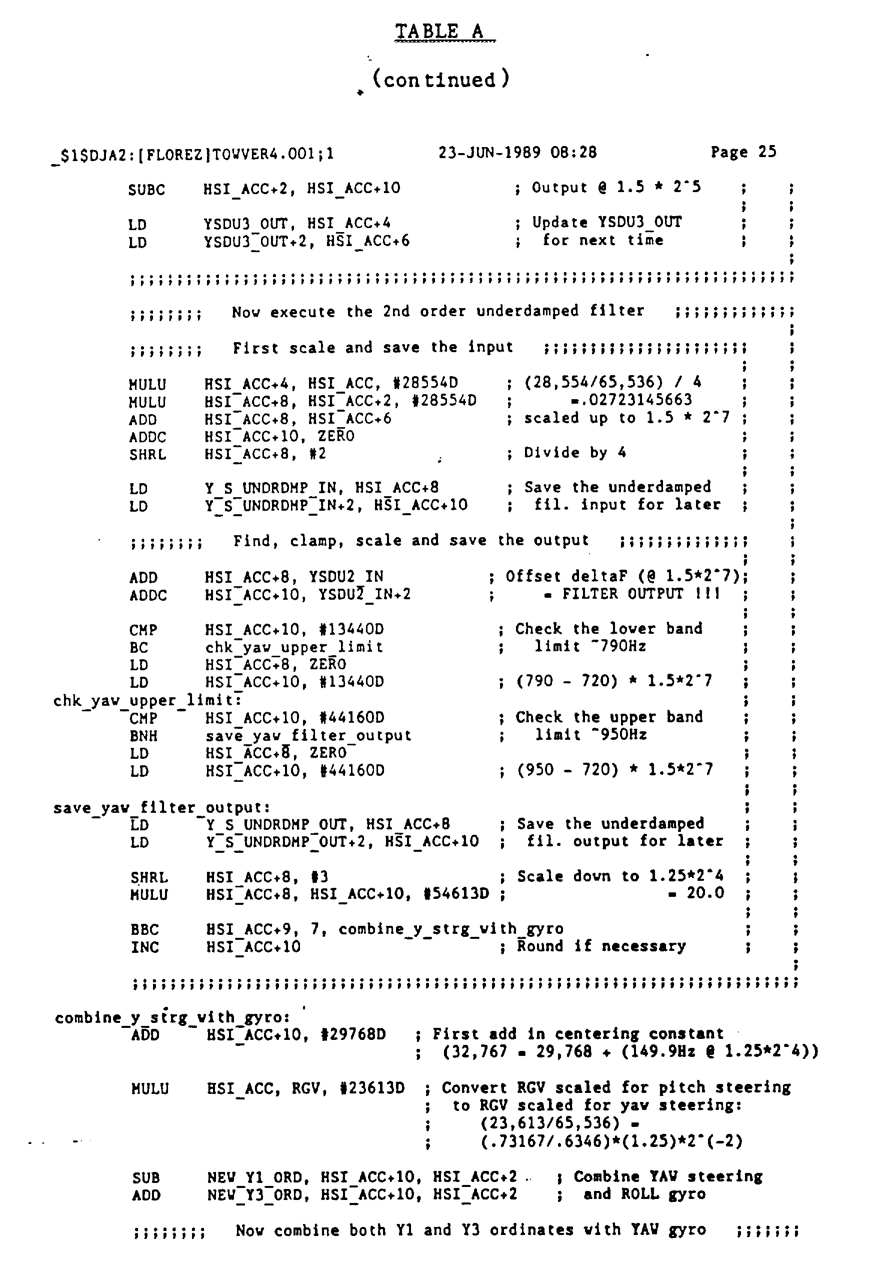

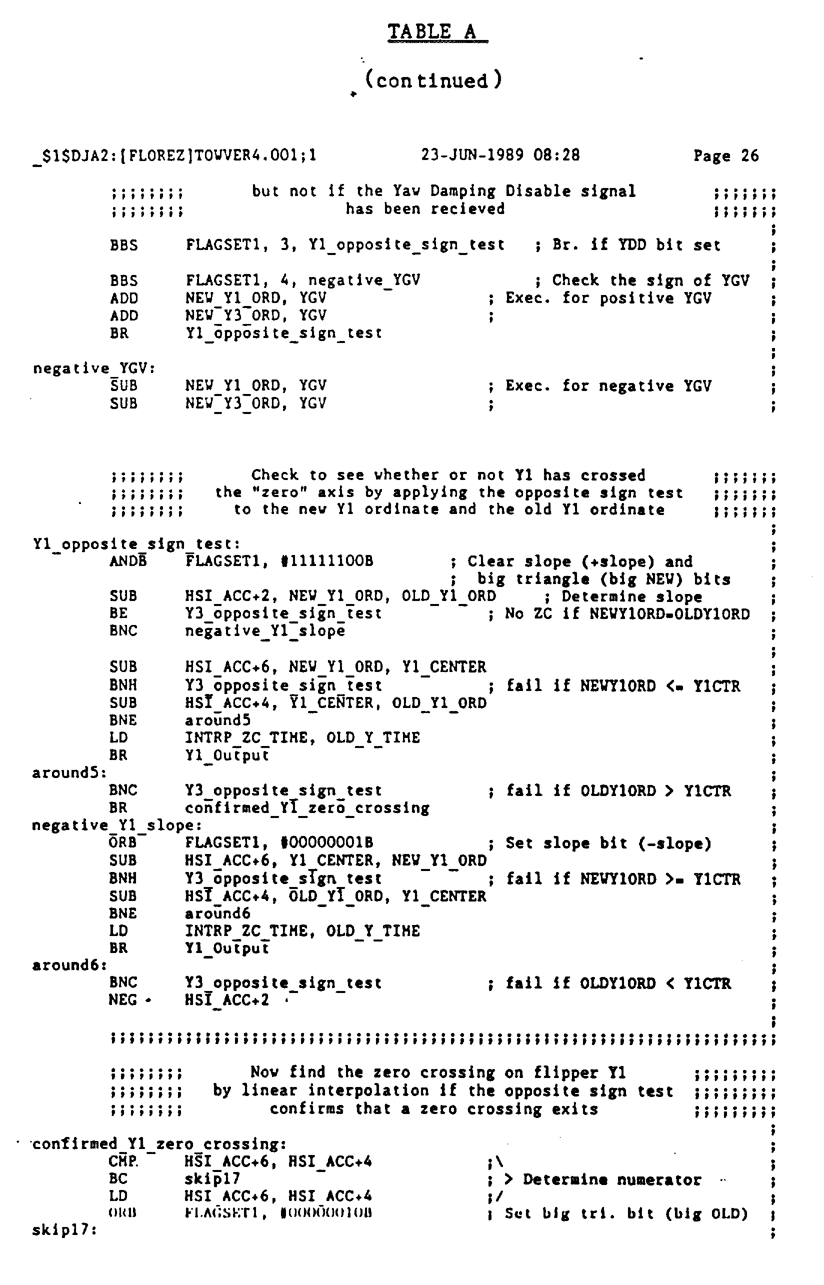

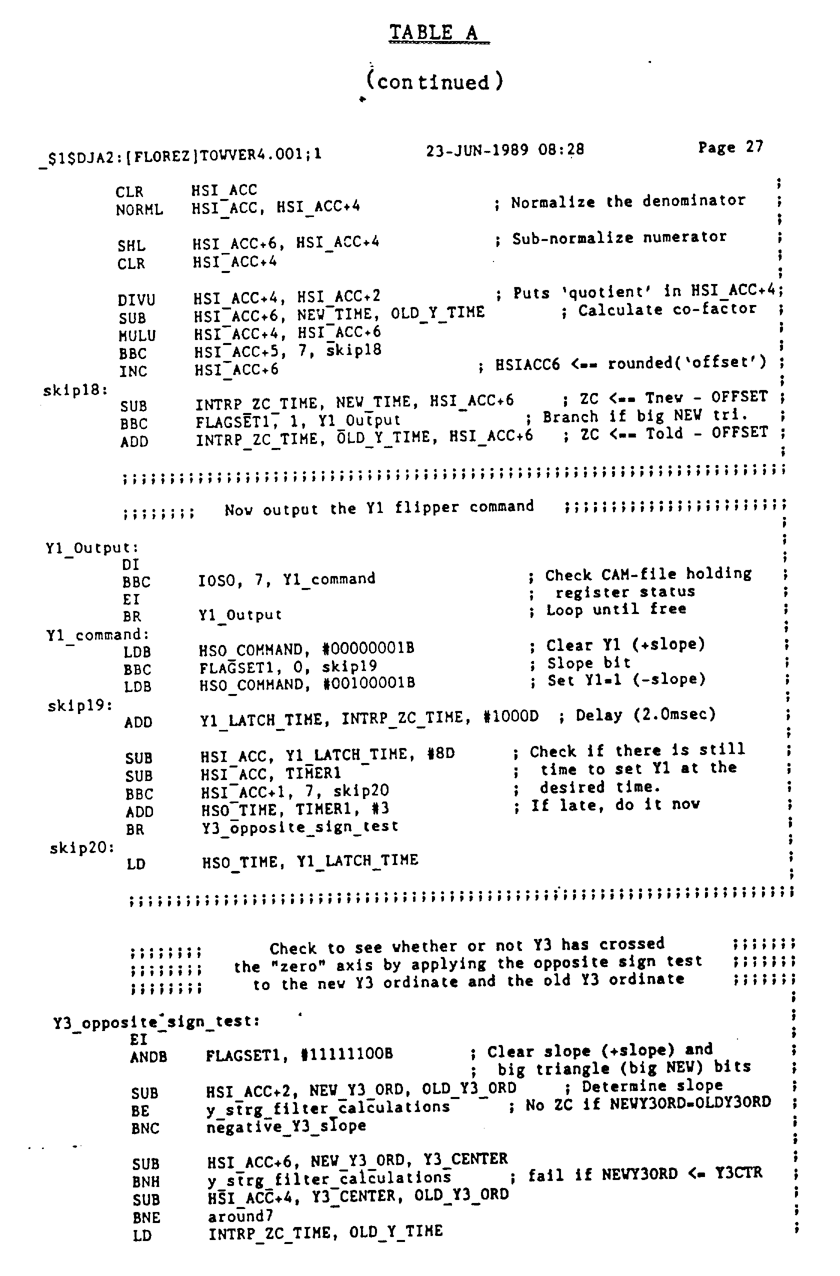

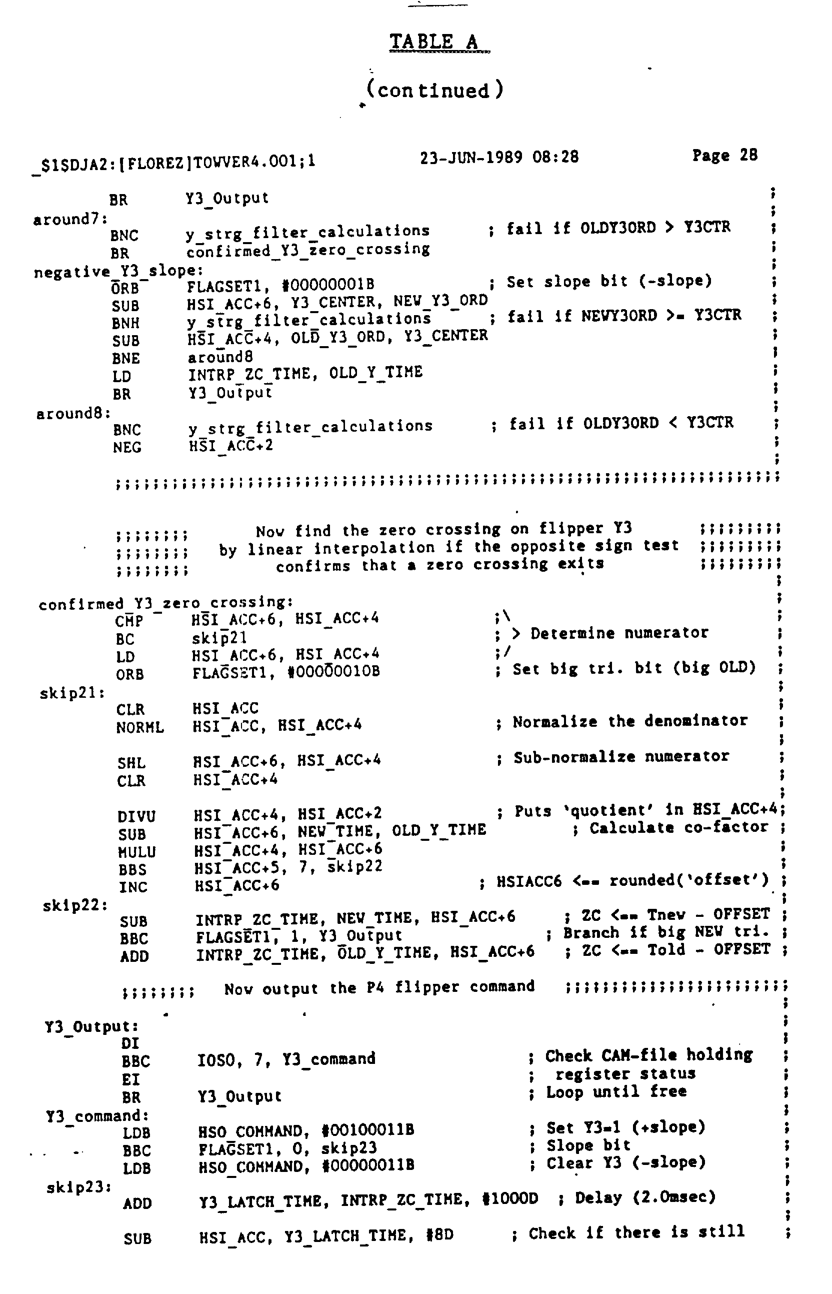

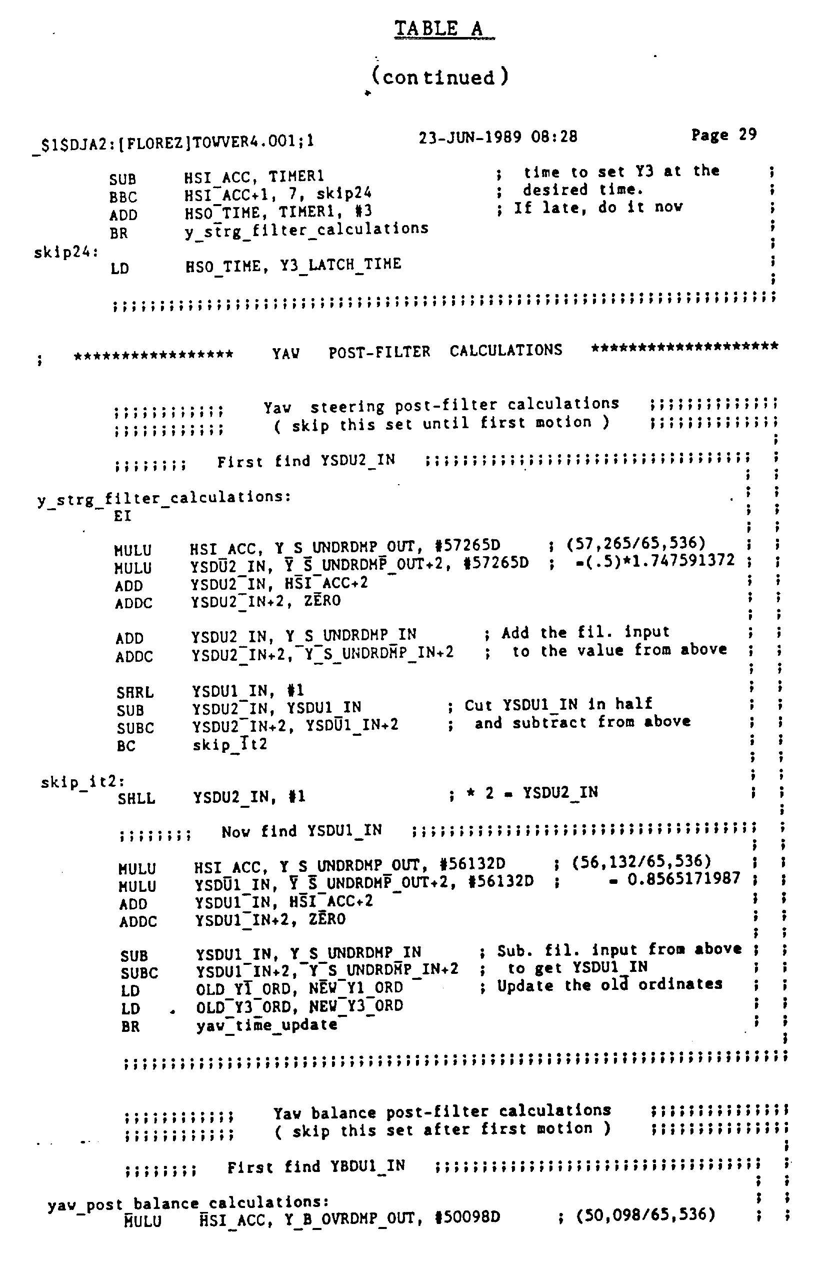

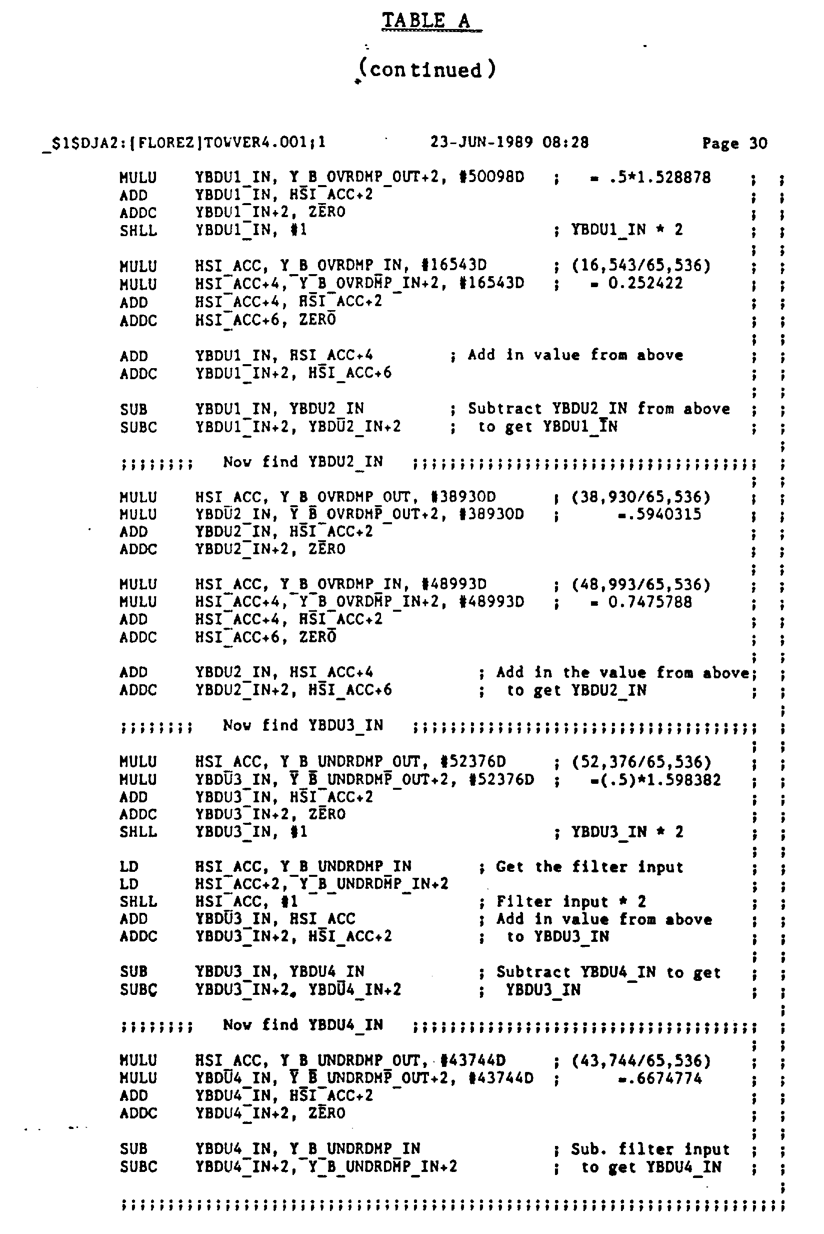

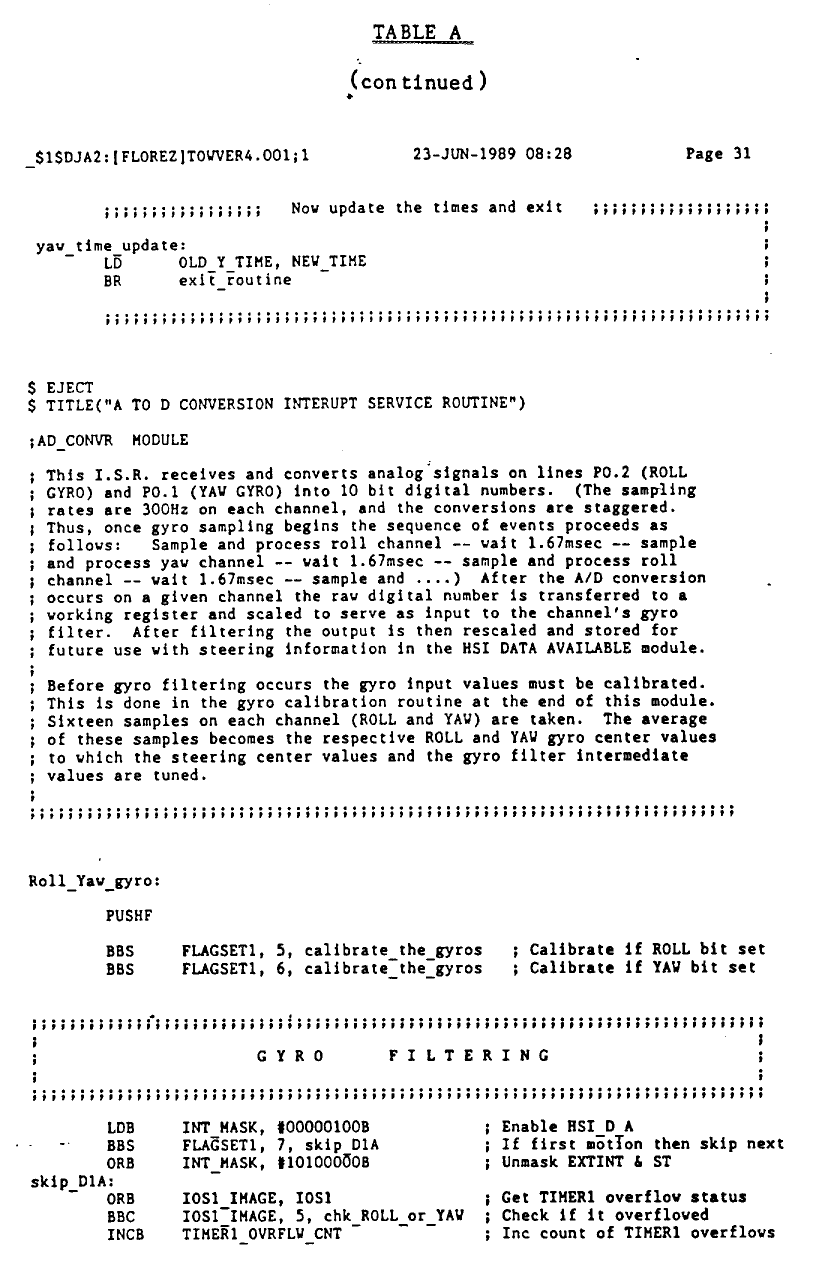

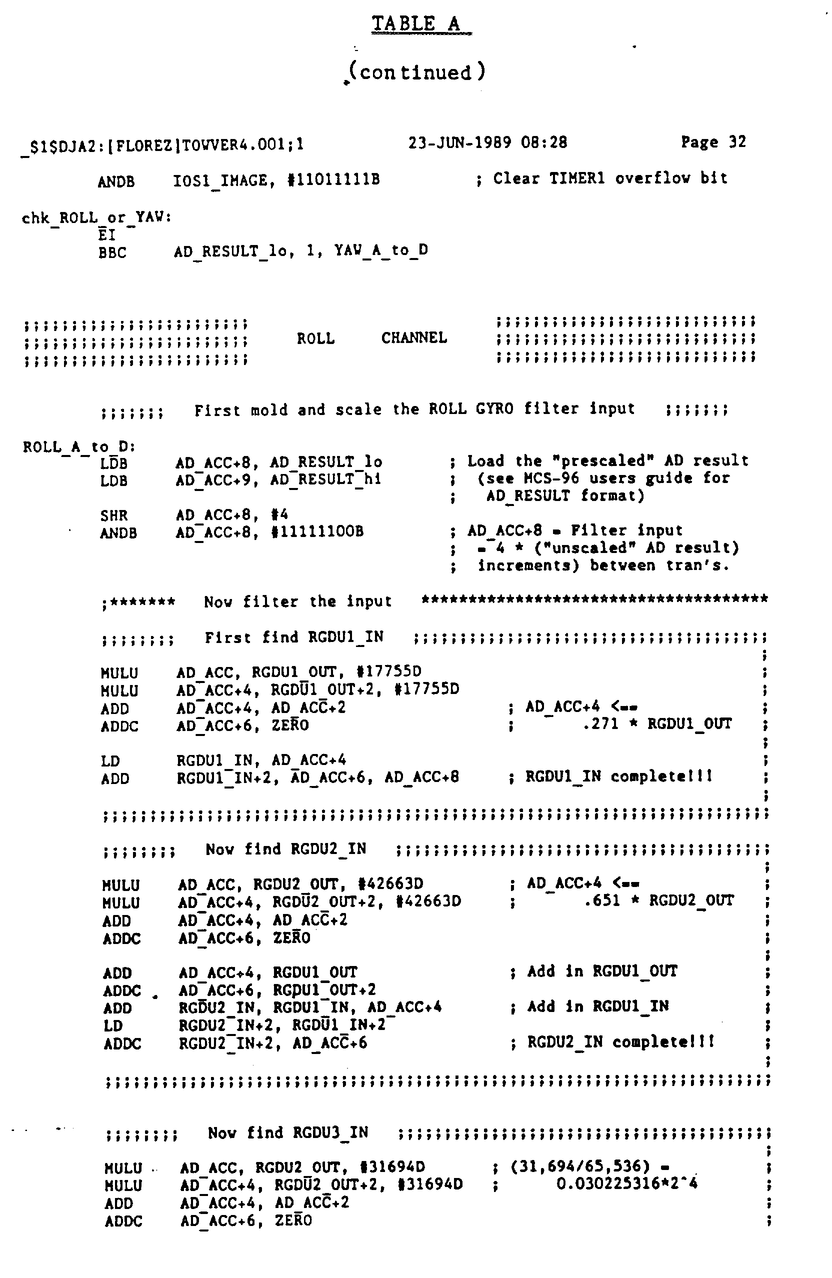

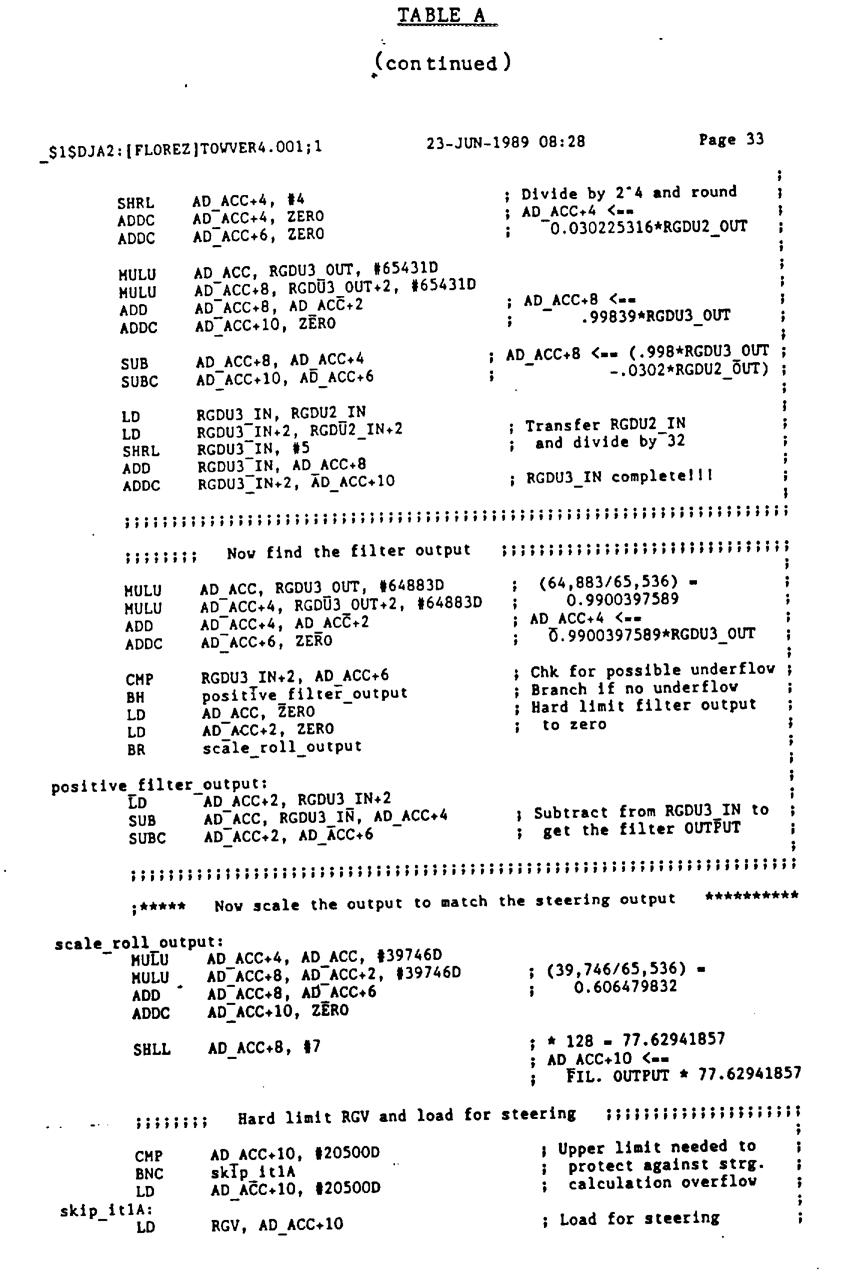

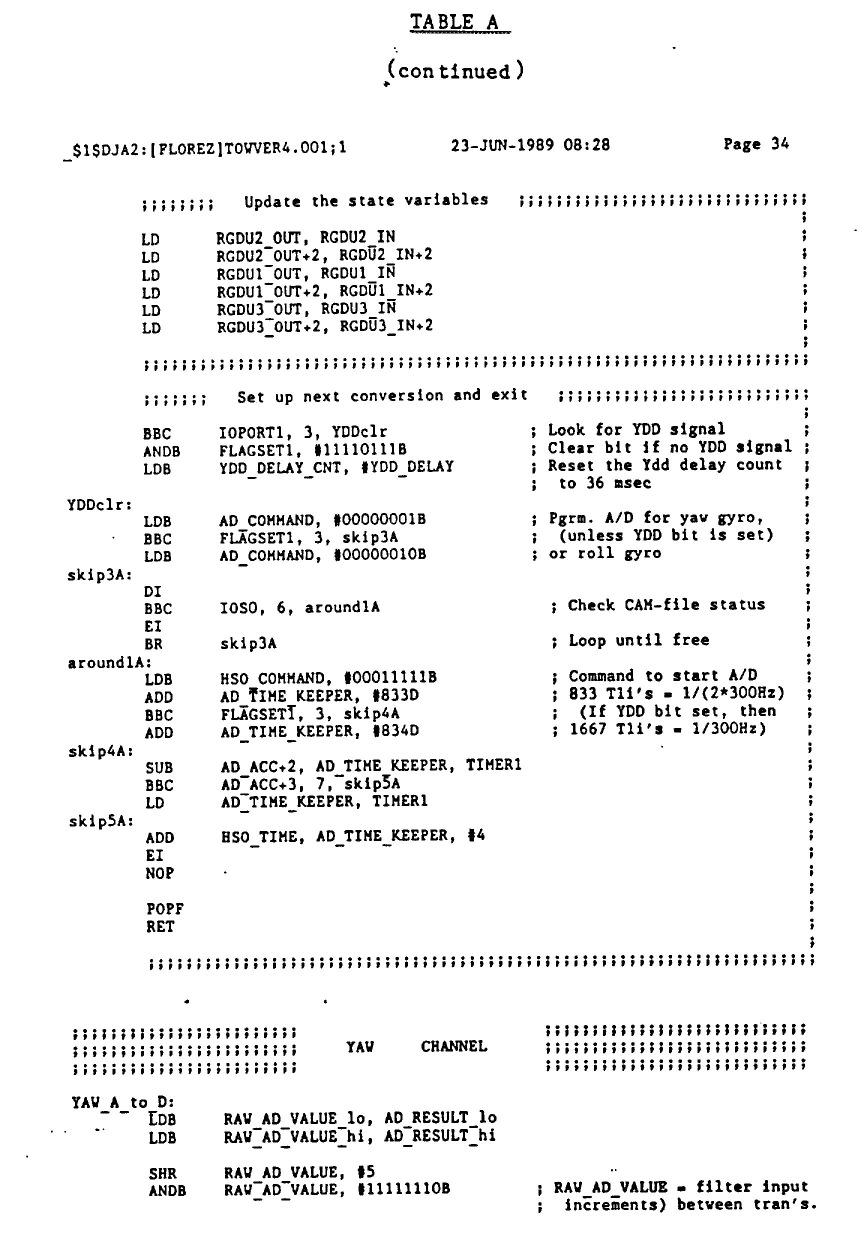

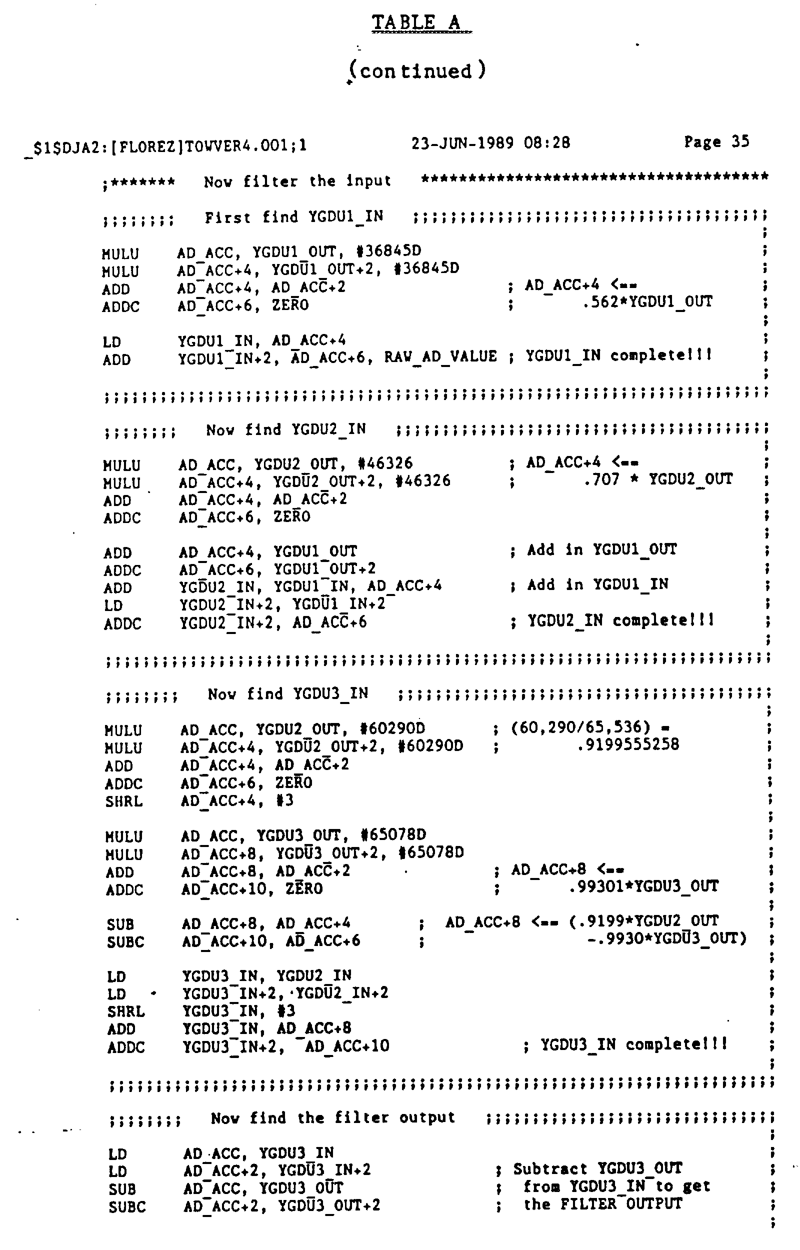

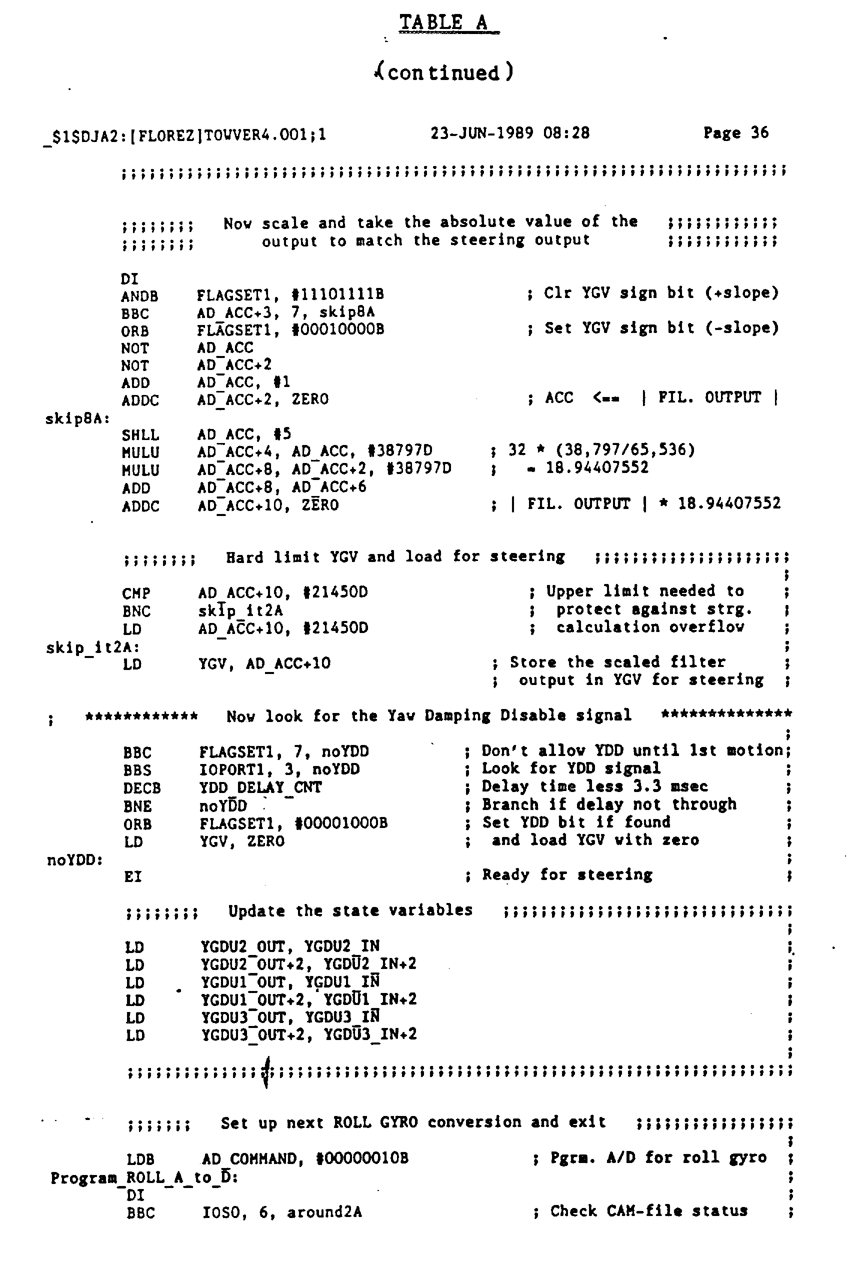

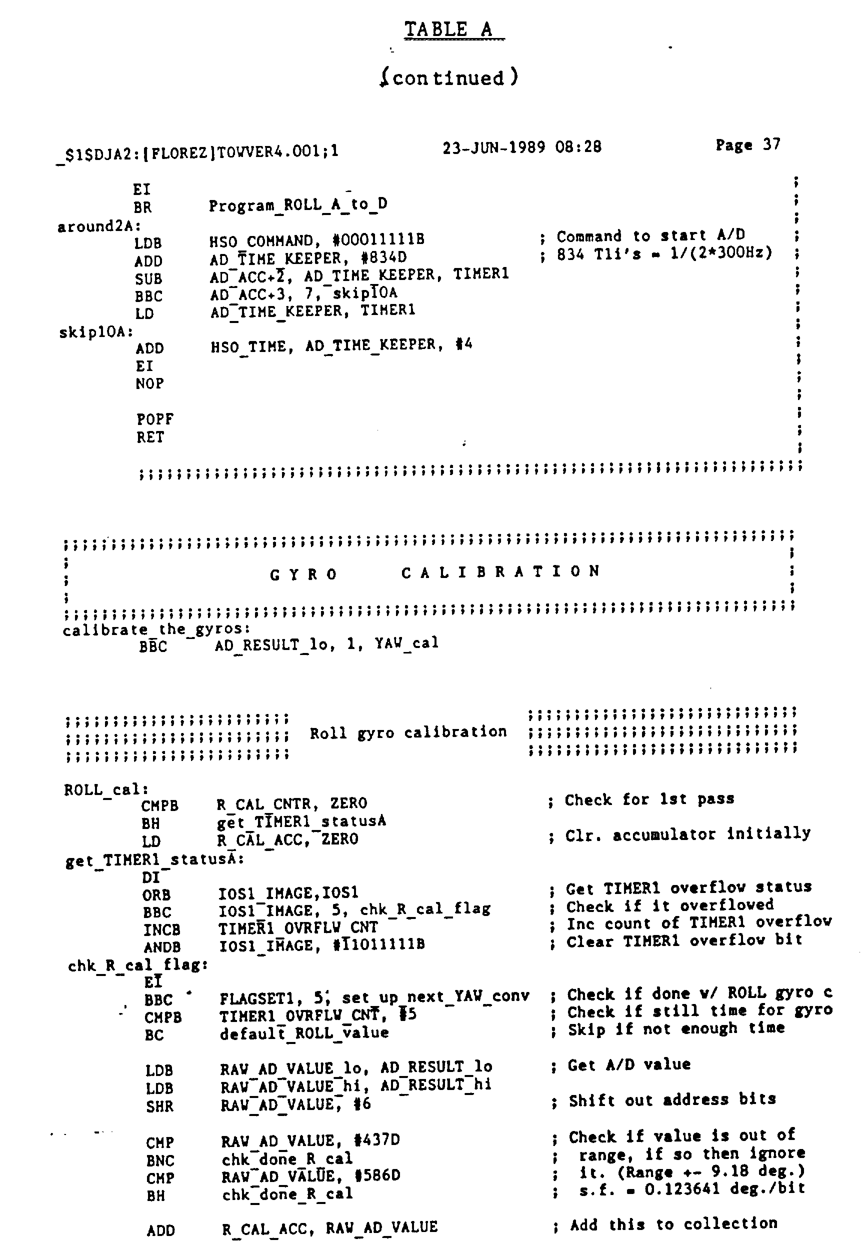

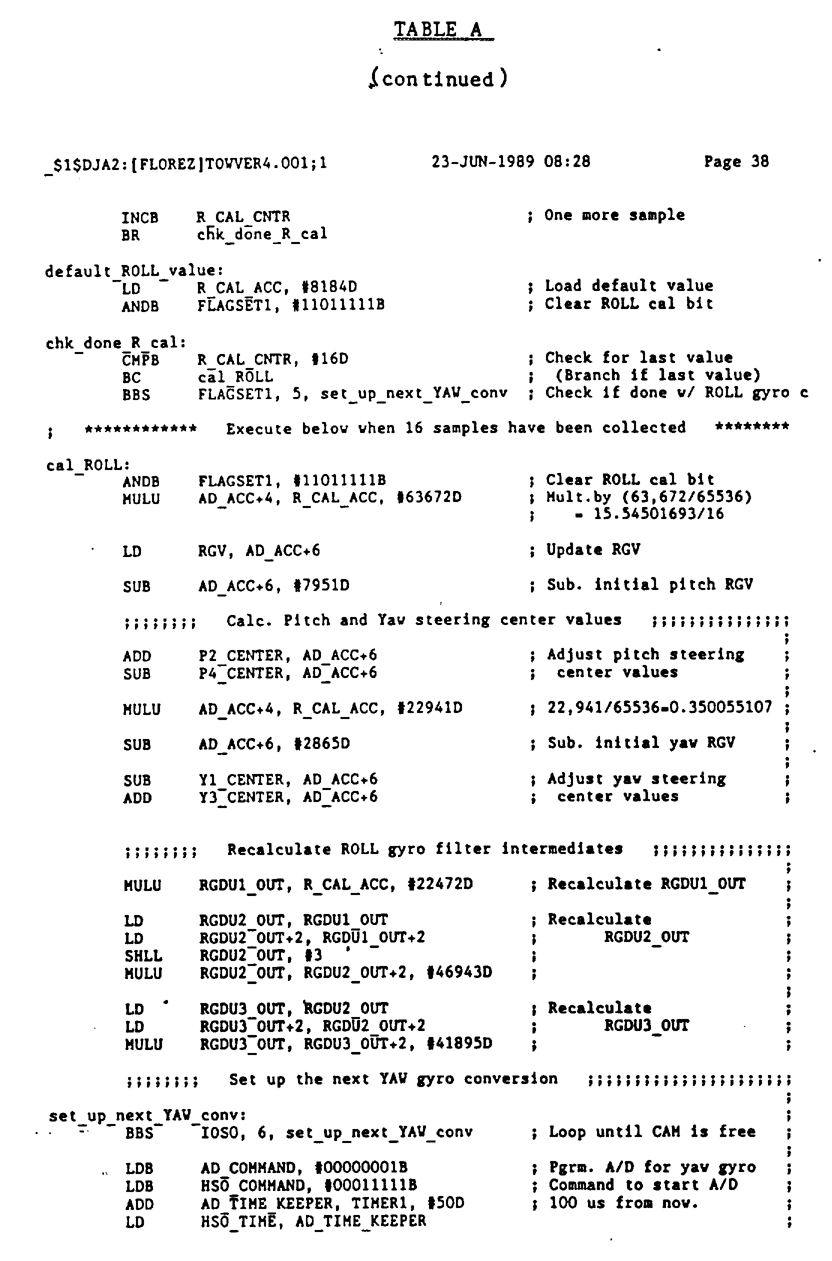

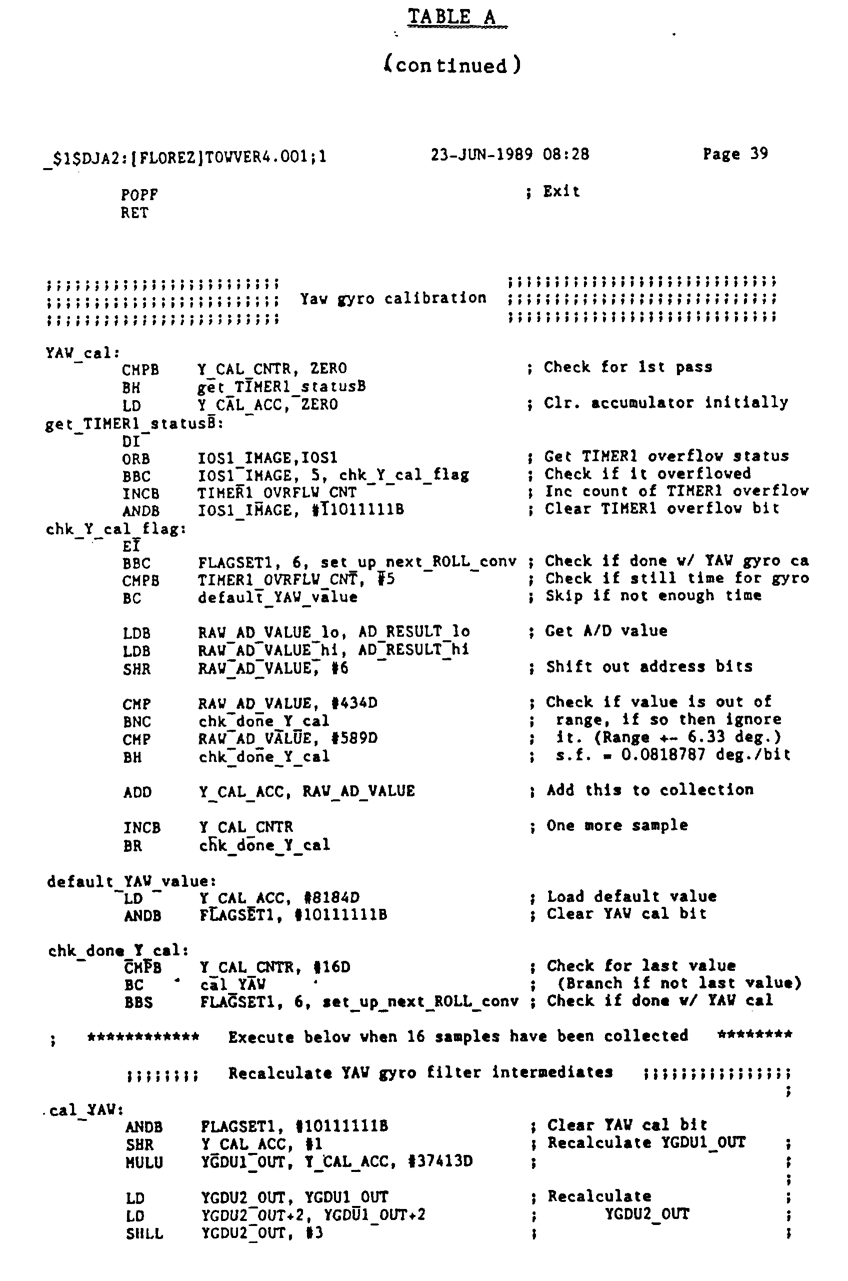

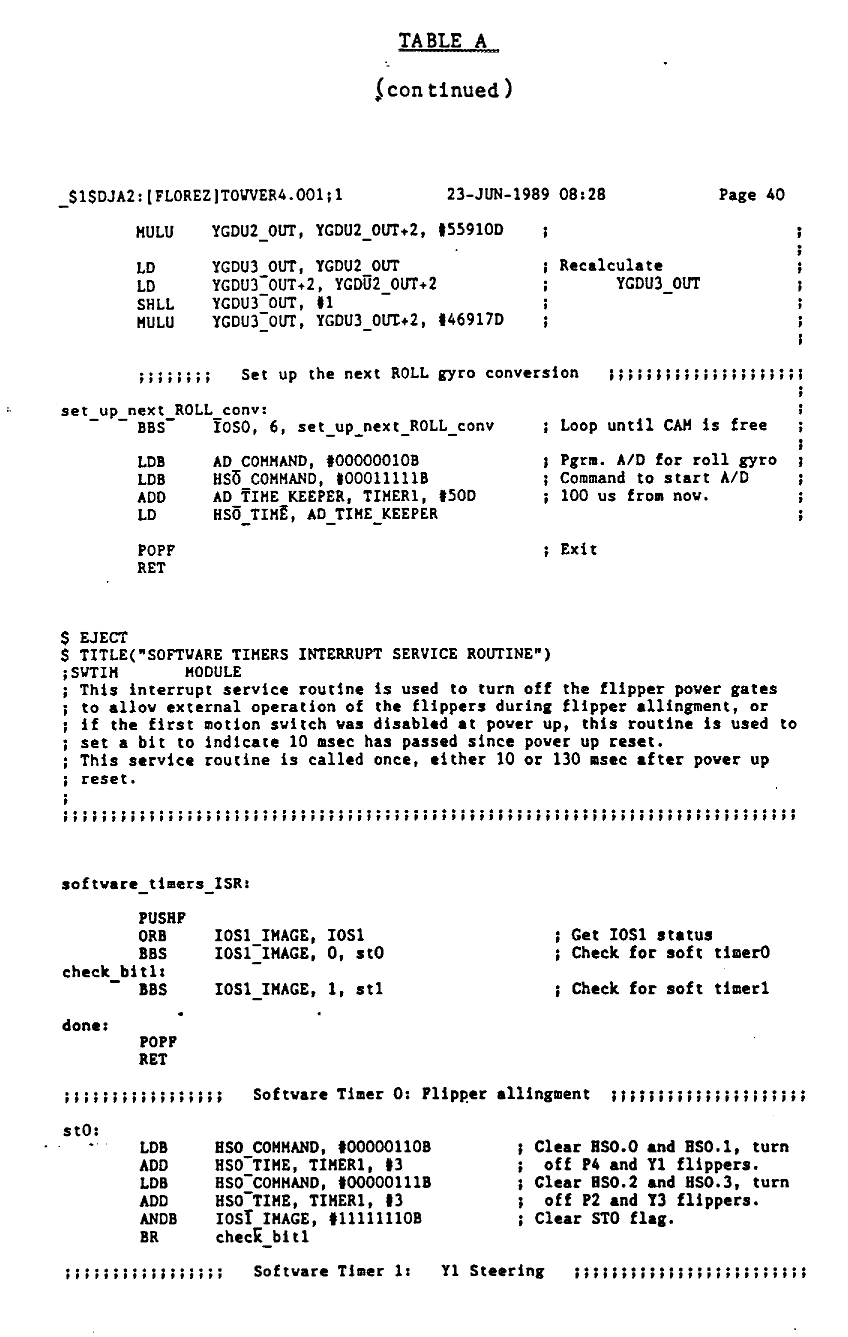

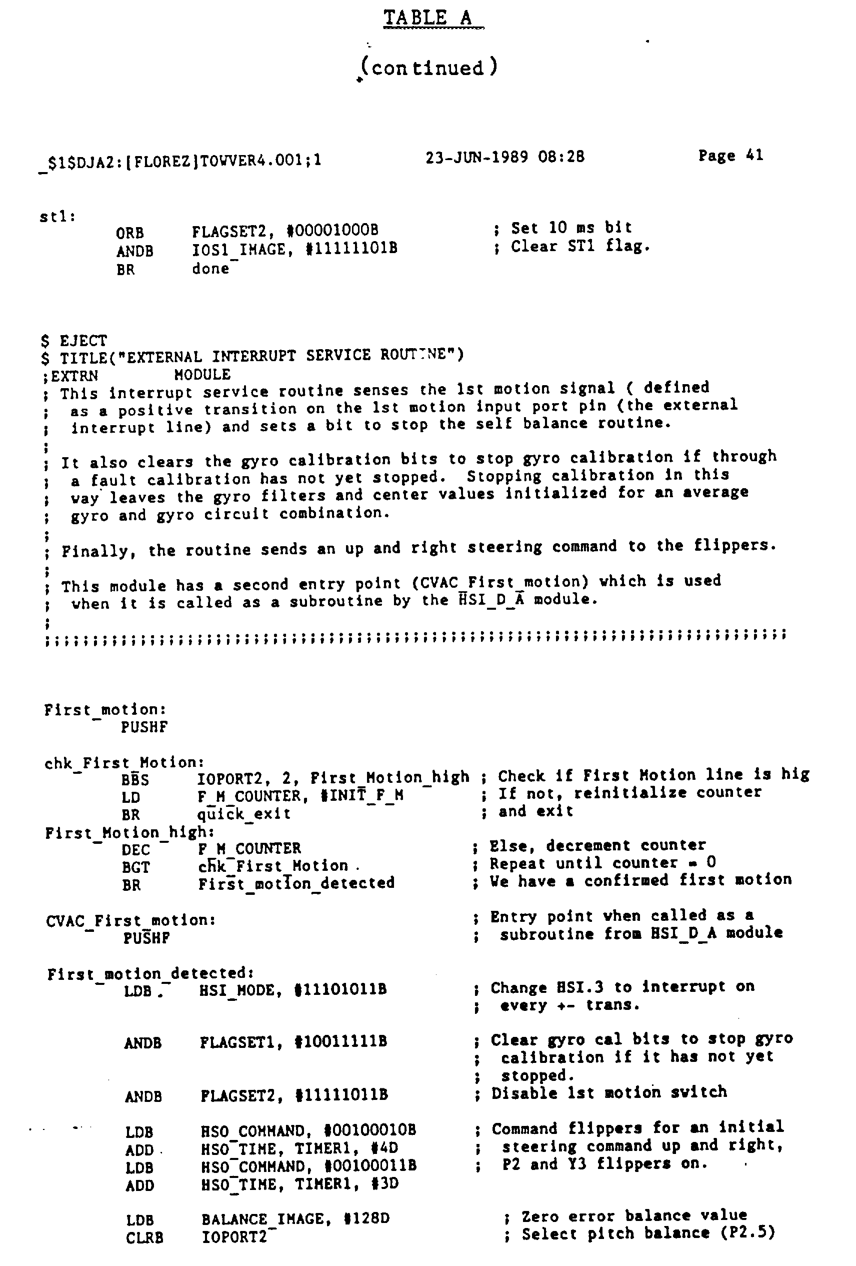

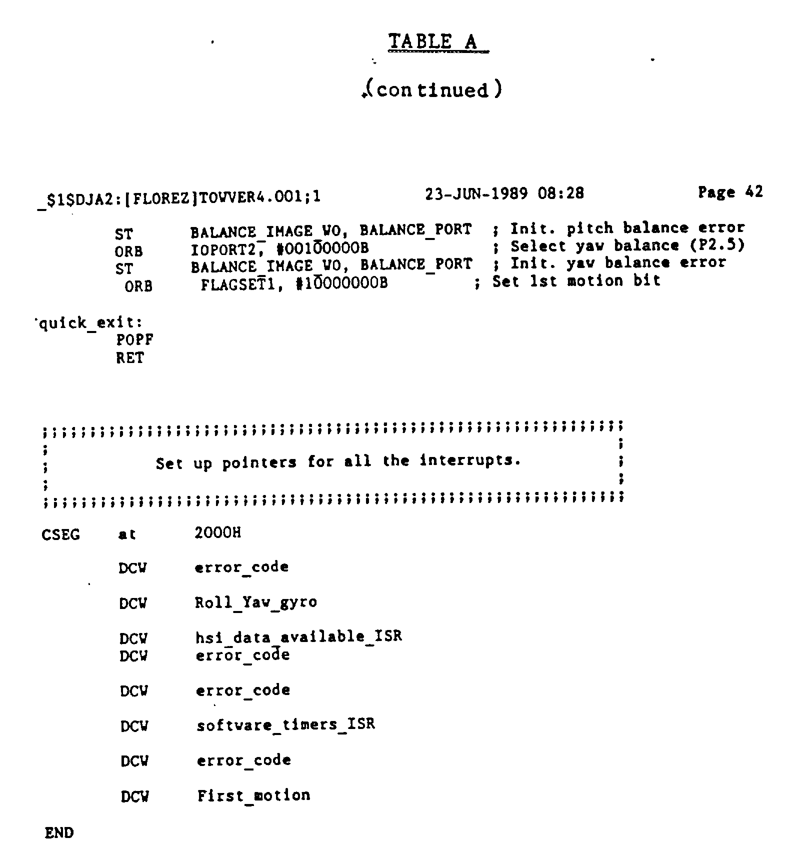

## Claims

1. An electronics unit for a missile comprising:
a) status means (10) for determining a status parameter of said missile and for generating a status output;
b) directional means (11) for receiving operator generated signals, and for generating an output based upon the operator generated signals; and,
c) control means (12) being responsive to the status output and the output of the directional means (11) for generating therefrom a yaw control signal and a pitch control signal, characterised in that
said status parameter comprises the positional status;
said status output comprises a yaw status signal and a roll status signal; and
said output of said directional means (11) comprises a yaw direction signal and a pitch direction signal.

2. An electronics unit according to claim 1, wherein said status means and said directional means are analog and said control means is digital.

3. An electronics unit according to claim 1 or claim 2, wherein said directional means has means for generating a shutter direction signal based upon said operator generated signal and wherein said control means has means for generating a shutter control signal based upon said shutter direction signal.

4. An electronics unit according to any preceding claim, wherein said status means includes:
a) a roll conversion means (10a) for converting a signal from a roll gyro (17) to the roll status signal; and,
b) a yaw conversion means (10b) for converting a signal from a yaw gyro (18) to the yaw status signal.

5. An electronics unit according to any preceding claim, wherein said yaw control signal is composed of a primary yaw control signal and a secondary yaw control signal, and wherein said pitch control signal is composed of a primary pitch control signal and a secondary pitch control signal.

6. An electronics unit according to claim 5, further comprising:
a) means for amplifying (13a) said primary yaw control signal;
b) means for amplifying (13b) said secondary yaw control signal;
c) means for amplifying (13c) said primary pitch control signal; and,
d) means for amplifying (13d) said secondary pitch control signal.

7. An electronics unit according to claim 5 or claim 6, wherein said control means includes means for receiving a first motion signal and for generating the primary yaw control signal, the secondary yaw control signal, the primary pitch control signal, and the secondary pitch control signal.

8. An operator guided missile being responsive to operator generated signals, said missile comprising:
a) a body portion (70) having,
1) a first pitch control surface (73),
2) a second pitch control surface,
3) a first yaw control surface, and,
4) a second yaw control surface;
b) a flight motor (74) located within said body portion and positioned for propelling said body portion;
c) a gyro system (80) mounted in said body portion and having,
1) a roll gyro (17) generating a roll gyro signal, and,
2) a yaw gyro (18) generating a yaw gyro signal; and,
d) a communication link being a continuous physical connection (71a) between the operator and the guided missile, said communication link communicating said operator generated signals;
e) an electronics control unit (81) as claimed in any one of claims 5 to 7, said directional means (11) being responsive to the operator generated signals received via said communication link; and
f) means for manipulating the control surfaces having,
1) a first actuator (19a) being responsive to said amplified primary yaw signal for physical movement of said first yaw control surface,
2) a second actuator (19b) being responsive to said amplified primary pitch signal for physical movement of said first pitch control surface,
3) a third actuator (19c) being responsive to said amplified secondary yaw signal for physical movement of said second yaw control surface, and,
4) a fourth actuator (19d) being responsive to said amplified secondary pitch signal for physical movement of said second pitch control surface.

9. An operator guided missile according to claim 8, wherein said control means is digital.

10. An operator guided missile according to claim 8 or 9, when dependent on claim 3, further comprising a beacon (73a) and wherein said shutter control signal is communicated to said beacon.

11. The operator guided missile according to any one of claims 8 to 10, when dependent on claim 7, further comprising a first motion switch (15) for generating said first motion signal.

12. An operator guided missile system comprising:
A) an operator input device (16) generating operator generated signals; and,
B) a missile as claimed in any one of claims 8 to 11, said communication link (71a) being a continuous physical connection between the operator input device and the missile.

## Patentansprüche

1. Elektronik-Einheit für einen Flugkörper, umfassend:
a) Status-Mittel (10) zum Bestimmen eines Status-Parameters des Flugkörpers und zum Erzeugen einer Status-Ausgangsgröße;
b) Richtungs-Mittel (11), das Operator-Signale empfängt und auf der Basis der Operator-Signale eine Ausgangsgröße erzeugt; und
c) Steuer-Mittel (12), das auf die Status-Ausgangsgröße und die Ausgangsgröße des Richtungs-Mittels (11) anspricht, um daraus ein Gier-Steuersignal und ein Kipp-Steuersignal zu erzeugen,
dadurch gekennzeichnet, daß
der Status-Parameter den Positions-Status umfaßt;
die Status-Ausgangsgröße ein Gier-Statussignal und ein Roll-Statussignal umfaßt; und
die Ausgangsgröße des Richtungs-Mittels (11) ein GierRichtungssignal und ein Kipp-Richtungssignal umfaßt.

2. Elektronik-Einheit nach Anspruch 1, dadurch gekennzeichnet, daß das Status-Mittel und das Richtungs-Mittel analog sind und das Steuer-Mittel digital ist.

3. Elektronik-Einbeit nach Anspruch 1 oder 2, dadurch gekennzeichnet, daß das Richtungs-Mittel ein Mittel zum Erzeugen eines Verschluß-Richtungssignals auf der Basis des Operator-Signals und das Steuer-Mittel ein Mittel zum Erzeugen eines Verschluß-Steuersignals auf der Basis des VerschlußRichtungssignals besitzt.

4. Elektronik-Einheit nach einem der vorhergehenden Ansprüche, dadurch gekennzeichnet, daß das Status-Mittel
a) ein Roll-Konversionsmittel (10a) zum Umwandeln eines Signals eines Rollkreisels (17) in das Roll-Statussignal; und
b) ein Gier-Konversionsmittel (10b) zum Umwandeln eines Signals eines Gierkreisels (18) in das Gier-Statussignal einschließt.

5. Elektronik-Einheit nach einem der vorhergehenden Ansprüche, dadurch gekennzeichnet, daß das Gier-Steuersignal aus einem primären und einem sekundären Gier-Steuersignal und das Kipp-Steuersignal aus einem primären und einem sekundären Kipp-Steuersignal besteht.

6. Elektronik-Einheit nach Anspruch 5, dadurch gekennzeichnet, daß sie weiterhin umfaßt:
a) ein Mittel (13a) zum Verstärken des primären Gier-Steuersignals;
b) ein Mittel (13b) zum Verstärken des sekundären Gier-Steuersignals;
c) ein Mittel (13c) zum Verstärken des primären Kipp-Steuersignals; und
d) ein Mittel (13d) zum Verstärken des sekundären Kipp-Steuersignals.

7. Elektronik-Einheit nach Anspruch 5 oder 6, dadurch gekennzeichnet, daß das Steuer-Mittel ein Mittel zum Empfangen eines ersten Bewegungssignals und zum Erzeugen des primären Gier-Steuersignals, des sekundären Gier-Steuersignals, des primären Kipp-Steuersignals und des sekundären Kipp-Steuersignals einschließt.

8. Operator-gelenkter Flugkörper, der auf Operator-Signale anspricht, wobei der Flugkörper umfaßt:
a) einen Körper-Abschnitt (70) mit
1. einer ersten Kipp-Steuerfläche (73),
2. einer zweiten Kipp-Steuerfläche,
3. einer ersten Gier-Steuerfläche, und
4. einer zweiten Gier-Steuerfläche;
b) ein Triebwerk (74) innerhalb des genannten Körperabschnitts, das zum Antrieb dieses Körperabschnittes angeordnet ist;
c) ein in dem genannten Körperabschnitt eingebautes Kreiselsystem (80) mit
1. einem Roll-Kreisel (17), der ein Roll-Kreiselsignal erzeugt, und
2. einem Gier-Kreisel (18), der ein Gier-Kreiselsignal erzeugt, und
d) ein Datenübertragungsglied, das eine beständige körperliche Verbindung (71a) zwischen dem Operator und dem Lenkflugkörper ist, wobei das Datenübertragungsglied die genannten Operator-Signale überträgt;
e) eine elektronische Steuereinheit (81) nach einem der Ansprüche 5 bis 7, wobei das genannte Richtungs-Mittel (11) auf Operator-Signale anspricht, die es über das Datenübertragungsglied empfängt und
f) ein Mittel zum Bedienen der Steuerflächen mit
1. einem ersten Stellglied (19a), das auf das verstärkte erste Gier-Signal für die körperliche Bewegung der ersten Gier-Steuerfläche anspricht,
2. einem zweiten Stellglied (19b), das auf das verstärkte erste Kipp-Signal für die körperliche Bewegung der ersten Kipp-Steuerfläche anspricht,
3. einem dritten Stellglied (19c), das auf das verstärkte zweite Gier-Signal für die körperliche Bewegung der zweiten Gier-Steuerfläche anspricht, und
4. einem vierten Stellglied (19d), das auf das verstärktge zweite Kipp-Signal für die körperliche Bewegung der zweiten Kipp-Steuerfläche anspricht.

9. Operator-gelenkter Flugkörper nach Anspruch 8, dadurch gekennzeichnet, daß das Steuer-Mittel digital ist.

10. Operator-gelenkter Flugkörper nach Anspruch 8 oder 9, dadurch gekennzeichnet, daß er in Bezug auf Anspruch 3 weiterhin eine Bake (73a) umfaßt, wobei das genannte Verschluß-Steuersignal zu der Bake übertragen wird.

11. Operator-gelenkter Flugkörper nach einem der Ansprüche 8 bis 10, dadurch gekennzeichnet, daß er in Bezug auf Anspruch 7 weiterhin einen ersten Bewegungsschalter (15) umfaßt, der das erste Bewegungssignal erzeugt.

12. System mit einem Operator-gelenkten Flugkörper, umfassend
A) eine Operator-Eingabevorrichtung (16), das Operator-Signale erzeugt; und
B) einen Flugkörper gemäß einem der Ansprüche 8 bis 11, wobei das Datenübertragungsglied (71a) eine beständige körperliche Verbindung zwischen der Operator-Eingabevorrichtung und dem Flugkörper ist.

## Revendications

1. Une unité électronique pour un missile comprenant :
a) des moyens de détermination d'état (10) pour déterminer un paramètre d'état du missile et pour générer une information de sortie d'état;
b) des moyens directionnels (11) pour recevoir des signaux générés par un opérateur, et pour générer une information de sortie basée sur les signaux générée par l'opérateur; et
c) des moyens de commande (12) réagissant à l'information de sortie d'état et à l'information de sortie des moyens directionnels (11) en générant à partir de celles-ci un signal de commande de lacet et un signal de commande de tangage, caractérisée en ce que
le paramètre d'état comprend l'état de position;
l'information de sortie d'état comprend un signal d'état de lacet et un signal d'état de roulis; et
l'information de sortie des moyens directionnels (11) comprend un signal de direction de lacet et un signal de direction de tangage.

2. Une unité électronique selon la revendication 1, dans laquelle les moyens de détermination d'état et les moyens directionnels sont analogiques et les moyens de commande sont numériques.

3. Une unité électronique selon la revendication 1 ou la revendication 2, dans laquelle les moyens directionnels comportent des moyens pour générer un signal de direction d'obturateur basé sur le signal généré par l'opérateur, et dans laquelle les moyens de commande comportent des moyens pour générer un signal de commande d'obturateur basé sur le signal de direction d'obturateur.

4. Une unité électronique selon l'une quelconque des revendications précédentes, dans laquelle les moyens de détermination d'état comprennent :
a) des moyens de conversion de roulis (10a) pour convertir un signal de roulis provenant d'un gyromètre de roulis (17) pour donner le signal d'état de roulis; et
b) des moyens de conversion de lacet (10b) pour convertir un signal provenant d'un gyromètre de lacet (18) pour donner le signal d'état de lacet.

5. Une unité électronique selon l'une quelconque des revendications précédentes, dans laquelle le signal de commande de lacet est constitué par un signal de commande de lacet primaire et un signal de commande de lacet secondaire, et dans laquelle le signal de commande de tangage est constitué par un signal de commande de tangage primaire et un signal de commande de tangage secondaire.

6. Une unité électronique selon la revendication 5, comprenant en outre :
a) des moyens (13a) pour amplifier le signal de commande de lacet primaire;
b) des moyens (13b) pour amplifier le signal de commande de lacet secondaire;
c) des moyens (13c) pour amplifier le signal de commande de tangage primaire; et
d) des moyens (13d) pour amplifier le signal de commande de tangage secondaire.

7. Une unité électronique selon la revendication 5 ou la revendication 6, dans laquelle les moyens de commande comprennent des moyens destinés à recevoir un premier signal de mouvement et à générer le signal de commande de lacet primaire, le signal de commande de lacet secondaire, le signal de commande de tangage primaire et le signal de commande de tangage secondaire.

8. Un missile guidé par un opérateur et réagissant à des signaux générés par l'opérateur, ce missile comprenant :
a) une partie de corps (70) comportant,
1) une première gouverne de tangage (73),
2) une seconde gouverne de tangage,
3) une première gouverne de lacet; et
4) une seconde gouverne de lacet;
b) un moteur de vol (74) placé à l'intérieur de la partie de corps et positionné pour propulser la partie de corps;
c) un système de gyromètres (80) monté dans la partie de corps et comprenant,
1) un gyromètre de roulis (17) générant un signal de gyromètre de roulis, et
2) un gyromètre de lacet (18) générant un signal de gyromètre de lacet; et
d) une liaison de communication consistant en une connexion physique continue (71a) entre l'opérateur et le missile guidée, cette liaison de communication communiquant les signaux générés par l'opérateur;
e) une unité de commande électronique (81) selon l'une quelconque des revendications 5 à 7, les moyens directionnels (11) réagissant aux signaux générés par l'opérateur qui sont reçus par l'intermédiaire de la liaison de communication; et
f) des moyens pour manipuler les gouvernes, comportant,
1) un premier actionneur (19a) qui réagit au signal de lacet primaire amplifié pour produire un mouvement physique de la première gouverne de lacet,
2) un second actionneur (19b) qui réagit au signal de tangage primaire amplifié en produisant un mouvement physique de la première gouverne de tangage,
3) un troisième actionneur (19c) qui réagit au signal de lacet secondaire amplifié en produisant un mouvement physique de la seconde gouverne de lacet, et
4) un quatrième actionneur (19d) qui réagit au signal de tangage secondaire amplifié en produisant un mouvement physique de la seconde gouverne de tangage.

9. Un missile guidé par un opérateur selon la revendication 8, dans lequel les moyens de commande sont numériques.

10. Un missile guidé par un opérateur selon la revendication 8 ou 9, lorsqu'elle est rattachée à la revendication 3, comprenant en outre une balise (73a), et dans lequel le signal de commande d'obturateur est transmis à cette balise.

11. Le missile guidé par un opérateur selon l'une quelconque des revendications 8 à 10, lorsqu'elle est rattachée à la revendication 7, comprenant en outre un premier interrupteur de mouvement (15) pour générer le premier signal de mouvement.

12. Un système de missile guidé par un opérateur comprenant :
A) un dispositif (16) d'entrée d'information par l'opérateur, produisant des signaux générés par l'opérateur; et
B) un missile selon l'une quelconque des revendications 8 à 11, la liaison de communication (71a) étant une connexion physique continue entre le dispositif d'entrée d'information par l'opérateur et le missile.
